Europäisches Patentamt

European Patent Office

Office européen des brevets

(19)

(11) **EP 1 519 225 A2**

(12) # EUROPEAN PATENT APPLICATION

(43) Date of publication:
30.03.2005 Bulletin 2005/13

(51) Int Cl.7: **G03C 5/395**, B01D 1/22,
C02F 1/08

(21) Application number: 04022708.4

(22) Date of filing: 23.09.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: 25.09.2003 JP 2003333558
25.12.2003 JP 2003428967

(71) Applicant: **Fuji Photo Film Co., Ltd.**
**Kanagawa (JP)**

(72) Inventor: **Nomura, Hideaki**
**Minami-Ashigara-shi, Kanagawa (JP)**

(74) Representative: **HOFFMANN - EITLE**
**Patent- und Rechtsanwälte**
**Arabellastrasse 4**
**81925 München (DE)**

(54) **Thin film evaporating concentrator, method of evaporating and solidifying photographic waste solution, and reuse method of photographic waste solution**

(57) A thin film evaporating concentrator for evaporating and solidifying a photographic processing waste solution, the thin film evaporating concentrator comprises a cylinder having an inner wall surface as a heating surface and at least one rotor blade rotating about the central axis of the cylinder. At least one of the inner wall surface of the cylinder and a surface of said at least one rotor blade defines a water contact angle of one of 90 degrees or more and smaller than 40 degrees. The thin film evaporating concentrator comprises a clearance of from 0.1 to 1.0 mm between the heating surface and each of said at least one rotor blade. And a reuse system of a photographic processing waste solution, wherein the solid matter formed from a photographic processing waste solution is mixed into a photographic processing composition so as to constitute 50 to 90% by weight of the composition.

FIG. 1

**Description**

**Background of the Invention**

1. Field of the Invention

The present invention relates to an apparatus and a method for evaporating and solidifying a photographic processing waste solution, and further to a photographic processing method (system) in which a photographic processing waste solution solidified by evaporation is reused as a solid processing chemical for silver halide photosensitive materials.

2. Description of the Related Art

In photographic processing after exposure to light, silver halide photographic materials generally undergo a developing step, a desilvering step, a washing step and a drying step in succession. A color developer, a bleach-fix bath and a rinsing bath (and/or a stabilizing bath) used in individual processing steps are each replenished with a given amount of replenishing agent at every time when the processing quantity of photographic materials amounts to a predetermined value.

In recent years a reduction in waste solution volume by adoption of a low replenishment rate and/or by recovery has been strongly required of the processing of photosensitive materials from the viewpoint of environmental load. As a medium for reduction of the waste solution volume, apparatus for concentrating waste solutions by reduced-pressure distillation is already in the actual use, and contributes to reduction in frequency of waste solution recovery and downsizing of storage space of waste solutions. However, with prevalence of mini labs and diversification of processing sites, further reduction of waste solution volume has been desired and has presented the problem of how to reuse waste solutions.

For reuse of photographic waste solutions, evaporating solidification of the photographic waste solutions is advantageous over recovery as concentrated solutions by evaporating concentration in point of possibility to enhance the reuse rate. As to an example of a method of reducing the waste solution volume, the method of solidifying processing waste solutions into powder and reusing the powder as a solid processing chemical is disclosed in JP-A-63-141692.

However, the solidified matter of waste solutions as prepared by the foregoing method is difficult to reuse, because it tends to evolve a sulfide gas through decomposition of sulfites as a bleach-fix bath component, and further to cause accumulation of sulfates when it is reused in a developing machine, resulting in lowering of a bleach-fix speed and contamination of the carrier rack and the development tank.

JP-B-6-20483 offers a thin film evaporating concentrator which forms a solution to be treated into a thin film on the inner wall of a cylinder with the aid of the centrifugal force generated by rotation of blades. In this apparatus, the solution to be treated is formed into a thin film extending in both the circumferential direction of the cylinder's inner wall and the rotation axis direction, and heated by a heating member provided around the perimeter of the cylinder to result in evaporation of its volatile component. On the other hand, its solid component is scraped off the inner wall of the cylinder by use of the rotor blade, and recovered. This thin film evaporating concentrator enables short-time efficient recovery of a treated solution as powdery matter by undergoing a series of operations, namely evaporation, concentration and drying. However, fast-pace application of heat under the necessity for short-time concentration tends to cause decomposition of ingredients in the solution. In a special case where the solution subjected to treatment is a photographic processing waste solution, though depends on the conditions, a large quantity of thiosulfate (commonly known as "hypo") contained therein as a fixer component undergoes oxidative decomposition to produce sulfate, and the sulfate is accumulated in the solidified matter to cause interference with reuse of the thus obtained solidified matter as a processing chemical. In addition, there occurs thermal decomposition of thiosulfate to evolve sulfur dioxide gas. So an extra measure to treat the evolvedgasbecomesnecessary. As a result, the apparatus offered therein has a disadvantage that the reuse rate of active ingredients in the photographic waste solution falls short of 50 %. Moreover, the drying by fast heat-up produces a problem that the solidified matter adheres to the inner wall surface of the heated cylinder and the rotor blade surface and forms lumps by coagulation, and the lumps come into contact with themselves, the rotor blade or the inner wall to make noises.

JP-A-2000-24402 discloses enhancement of rapid drying power by optimization of the ratio between the heating surface length in the rotation axis direction of a cylindrical heating member and the inside diameter of a cylinder. However, such a dimensional regulation alone, though effective in enhancing the rapid drying power, cannot resolve the problems of noise and gas pollutions and still cause the solidified matter deterioration from local overheating.

Therefore, it has been required to find an effective solidifying method by which a photographic waste solution is rapidly evaporated and solidified, and besides, processingingredientsinthephotographicwastesolution are prevented from deteriorating during the solidification treatment to maintain the reclamation rates thereof at a high level and the problem of noises produced by contact between, for example, lumps of solidified matter is solved.

**Summary of the Invention**

A first object of the invention is to provide a thin film evaporating concentrator for solidifying a photographic waste solution, which enables a photographic waste solution to be solidified easily and recovered in the form of solid matter, prevents ingredients in the waste solution from deteriorating by thermal decomposition to keep a high level of reclamation rate, and is free of noises caused by contact between lumps formed by coagulation of the solidified matter.
A second object of the invention is to provide a method of evaporating and solidifying a photographic waste solution, which uses the aforesaid thin film evaporating concentrator and enables reuse of active ingredients in the waste solution by evaporating and solidifying a photographic waste solution without undergoing deterioration from thermal decomposition.
A third object of the invention is to provide a photographic waste solution-reusing system wherein a photographic waste solution is evaporated and solidified into solid matter by use of the aforesaid thin film evaporating concentrator and the solid matter is incorporated into a photographic processing composition and reused for photographic processing.
A fourth object of the invention is to provide a thin film evaporating concentrator that enables a photographic waste solution to be easily solidified and recovered in the form of solid matter without ingredient deterioration from thermal decomposition.
A fifth object of the invention is to provide a method of evaporating and solidifying a photographic waste solution, which uses the aforesaid thin film evaporating concentrator and enables reuse of active ingredients in the waste solution by evaporating and solidifying a photographic waste solution without undergoing deterioration from thermal decomposition.
A sixth object of the invention is to provide a photographic waste solution-reusing system wherein a photographic waste solution is evaporated and solidified into solid matter by use of the aforesaid thin film evaporating concentrator and the solid matter is incorporated into a photographic processing composition and reused for photographic processing.
In order to achieve the first object, we have made intensive studies of methods by which overheating can be prevented from occurring during an evaporating and solidifying operation and deterioration of ingredients in a processing solution can be therefore suppressed, and what is more, firm adhesion of the solidified matter to surfaces of apparatus members can be avoided. As a result, it has been found that the former problem can be solved by devising a heating method for ensuring a uniform distribution of heat in the thin film of a processing solution to be treated and the latter problem can be solved by improving physical properties of the heating surface and others with which the solidified matter comes into contact. And application of these methods to treatment of a photographic waste solution has allowed attainment of both first and second objects of the invention. Further, it has been found that the solidified matter thus obtained can retain a quality for reuse as a processing chemical, and so the reuse system of photographic processing waste solutions as the third object can be established by studying the evaporating solidification apparatus, operating conditions thereof and reformulation of a processing chemical. More specifically, the invention includes the following thin film evaporating concentrator for a photographic waste solution, evaporating concentration method and reuse system of a photographic waste solution:

(1) A thin film evaporating concentrator comprising:

a cylinder having an inner wall surface as a heating surface; and
at least one rotor blade rotating about a central axis of the cylinder,

wherein rotating of said at least one rotor blade provides a photographic processing waste solution with a centrifugal movement, so as to evaporate the photographic processing waste solution on the inner wall surface to be formed into a thin film, and
wherein at least one of (i) the inner wall surface of the cylinder and (ii) a surface of each of said at least one rotor blade defines a water contact angle of one of 90 degrees or more and smaller than 40 degrees.
(2) The thin film evaporating concentrator of as described in (1) above,
wherein a motor rotating said at least one rotor blade has a rated rotating torque of 1.4 N·m or below.
(3) A method of evaporating and concentrating a photographic processing waste solution, the method comprising
evaporating the photographic processing waste solution at 10 to 80 Torr (1.33 to 10.64 kPa) of vacuum by using a thin film evaporating concentrator as described in (1) or (2) above.
(4) A method of evaporating and solidifying a photographic processing waste solution, the method comprising
evaporating the photographic processing waste solution by using a thin film evaporating concentrator as described in (1) or (2) above,

wherein a temperature of the heating surface is from 60 to 150°C.

(5) A reuse method of a photographic processing waste solution, the method comprising:

evaporating and solidifying the photographic processing waste solution by using a thin film evaporating concentrator as described in (1) or (2) above, so as to form the photographic processing waste solution into a solid matter; and
preparing a solid photographic processing composition that includes the solid matter in amount of from 50 to 90% by weight.

( 6) The reuse method of a photographic processing waste solution as described in (5) above,

wherein the evaporating and solidifying is performed without a silver recovering treatment for the photographic processing waste solution.

In order to achieve the fourth object, we have made intensive studies of methods by which the aforesaid overheating under operations for evaporation and solidification can be prevented; as a result, processing solution's ingredients suffer no deterioration. And we have devised a heating method that can ensure a uniform heat distribution in thin film of a processing solution under treatment. By applying this heating method to treatment of a photographic waste solution, we have succeeded in accomplishing the fourth and the fifth objects. Further, the solid matter obtained in accordance with this method retains a quality reusable as a processing chemical. Therefore, we have succeeded in establishing a reuse system of a photographic processing waste solution, which is the sixth object, from studies on methods for evaporating solidification, conditions for such an operation and methods for recomposing processing chemicals. In other words, the invention includes the following thin film evaporating concentrator for a photographic waste solution, method of evaporating and solidifying a photographic waste solution and reuse method of a photographic waste solution.

(7) A thin film evaporating concentrator of a photographic processing waste solution, comprising:

a cylinder having an inner wall surface as a heating surface; and
at least one rotor blade, each of which being configured so as to rotate, in the cylinder, about a central axis of the cylinder serving as a rotating axis,

wherein a clearance between the heating surface and each of said at least one rotor blade is from 0.1 to 1.0mm.

(8) The thin film evaporating concentrator as described in (7) above,

wherein each of said at least one rotor blade is provided to be capable of swinging freely in a rotating direction of said at least one rotor blade and a opposite direction to the rotating direction, and
wherein each of said at least one rotor blade has a center of gravity in a position shifted to the heating surface from a midpoint between the rotating axis and the heating surface.

(9) A method of evaporating and solidifying a photographic processing waste solution, the method comprising evaporating the photographic processing waste solution at 20 to 80 Torr (2.66 to 10.64 kPa) of vacuum by using a thin film evaporating concentrator as described in (7) or (8) above.

(10) A method of evaporating and solidifying a photographic processing waste solution, the method comprising evaporating the photographic processing waste solution by using a thin film evaporating concentrator as described in (7) or (8) above,

wherein a temperature of the heating surface is from 60 to 150°C.

(11) A reuse method of a photographic processing waste solution, the method comprising:

evaporating and solidifying the photographic processing waste solution by using a thin film evaporating concentrator as described in (7) or (8) above, so as to form the photographic processing waste solution into a solid matter; and
preparing a solid photographic processing composition that includes the solid matter in amount of from 50 to 90% by weight.

(12) The reuse method of a photographic processing waste solution as described in (11) above,

wherein the evaporating and solidifying is performed without a silver recovering treatment for the photographic processing waste solution.

## Brief Description of the Drawings

Fig. 1 is a cross-sectional diagram showing schematically the main part of a thin film evaporating concentrator according to an embodiment of the invention;

Fig. 2 is a drawing of a cross section appearing if the cylinder of the apparatus shown in Fig. 1 is cut along the direction of the II-II line;

Fig.3 is an enlarged schematic diagram showing a rotor blade and the cylinder's inner wall included in a thin film evaporating concentrator according to another embodiment of the invention; and

Fig. 4 is a flow chart explaining reuse of waste solutions in the present photographic waste solution treatment system.

## Detailed Description of the Invention

<< Thin Film Evaporating Concentrator >>

The present thin film evaporating concentrator comprises: a cylinder having an inner wall surface as a heating surface; and at least one rotor blade rotating about a central axis of the cylinder, wherein rotating of said at least one rotor blade provides a photographic processing waste solution with a centrifugal movement, so as to evaporate the photographic processing waste solution on the inner wall surface to be formed into a thin film.

[First Embodiment of Thin Film Evaporating Concentrator]

The first embodiment of thin film evaporating concentrator is characterized in that the inner wall surface of the cylinder and/or a surface of the rotor blade define a water contact angle of one of 90 degrees or more and smaller than 40 degrees.

As the waste solution is concentrated by heating and increases in viscosity, it comes to adhere to the inner wall surface as the heating surface of the cylinder and the surface of the rotor blade stirring the waste solution in the cylinder; consequently, the solidified matter of the waste solution forms fixed layers. The fixed layer on the heating surface hinders heat conduction from the heating surface to the flowing waste solution and retards the progress of evaporating concentration. In addition, the fixed layers solidify and get firmer and firmer, and come to make noises by collisions into which they are brought as the rotor blade rotate. The noise prevention by inhibiting the formation of those fixed layers is one of the objects of the invention, and this object can be achieved by adjusting the water contact angle of the heated inner wall surface, the rotor blade surface, or both to the aforementioned range.

The suitable water contact angle of each of the inner wall surface as a heating surface and the rotor blade surface is one of 90 degrees or more and smaller than 40 degrees, preferably one of 92 degrees or more and smaller than 35 degrees.

Although there is no conclusive reason why the formation of fixed layers is inhibited by specifying the water contact angle as mentioned above and rendering the inner wall surface and the rotor blade surface hydrophilic or hydrophobic, it can be supposed that when the water contact angle is small the wettability of each of the surfaces with which the concentrated waste solution is brought into contact is good, and so the concentrated waste solution is prevented from staying on the same surface without any changing of a surface with which the waste solution comes into contact and flows according to rotation torque to result in suppression of adhesion; while, when the water contact angle is great the surface repels the concentrated waste solution and the flowability on the contact surface is kept to result in prevention of adhesion. When the water contact angle is moderate, on the other hand, it is thought that relative movement of a waste solution at the interface between the waste solution and the surface with which the waste solution comes into contact does not occur, so the heating solidification at the interface proceeds to form fixed layers.

In the present evaporating concentrator, the water contact angle of the inner wall surface and the rotor blade surface refers to the angle which the water surface forms with the surface of a material forming the inner wall surface and the rotor blade surface on their contact line. The water contact angle is determined by the usual method. Specifically, a drop of water (distilled water or purified water) is put on the surface of a flat board made of the foregoing material, the radius r of the water drop bottom and the height h of the water drop are measured after the water drop is brought into a condition of stability, and the water contact angle $\delta$ is given by the expression $\tan\delta = h/r$. And it is well known that when the material surface is repulsive to a water drop, the water contact angle $\delta$ is greater than 90 degrees, while the material surface is hydrophilic, the water contact angle $\delta$ takes on a small value.

The water contact angle measurement in the invention is carried out immediately after putting a water drop on a material surface. The expression "immediately after" used herein is defined as a two-second lapse after putting a water drop, and water contact angles measured at this point in time are adopted in the invention.

The method for measuring a water contact angle may be any of known methods. As an example of apparatus for measuring the water contact angle, a contact angle meter CA-D made by Kyowa Interface Science Co., Ltd. can be used. And the water contact angle can be determined by the water-in-air method. Alternatively, a FACE automatic contact angle meter CA-Z made by the same company may be used.

As understood from the above, the formation of fixed layers is influenced by a torque of the shaft which rotates the rotor blade stirring a waste solution as they make the waste solution revolve about the shaft. The suitable torque of the shaft is 1.4 N·m or less, preferably 1.2 N· m or less, per 1,000 cm$^2$ in area of the heated surface of cylinder wall. The shaft may have a low torque so long as a substantial flow of the waste solution is produced thereby. When the shaft has an extremely low torque, however, the movements of the waste solution relative to the inner wall surface and the rotor blade surface come to a stop and fixed layers tend to be formed. Therefore, it is appropriate that the torque is 0.2 N · m or more, and the torque of 0.3 N· m or more is preferred to be on the safe side.

The suitable torque range of the shaft is proportional to the area of a cylinder's heating surface for concentrating a waste solution (the surface on which fixed layers of the waste solution are formed).

The measurement of a torque which the shaft produces can be made with a torque meter according to a known method, and the torque can be determined with ease from the relation between the input current to a motor for rotating the shaft, load torque, and the number of revolutions.

As a material for making the inner wall as a heating member and a rotor blade, a stainless plate is usually adopted from the standpoints of heat conductivity and corrosion resistance. In a preferred embodiment of the invention, a layer of Teflon film is provided on a stainless plate to reinforce the corrosion resistance. The layer of Teflon film, though it may be a Teflon resin lining or a Teflon resin coating, is preferably the Teflon resin coating in the sense that the coating can be made thinner and support heat conductivity. In coating the resin, it is advantageous to use a coating agent of spray type because the coating agent can be sprayed more or less unevenly to form an appropriately rough surface.

As an alternative resin film, a coating or lining of heat-crosslinkable or light-crosslinkable resin, especially epoxy resin, may be provided.

The present thin film evaporating concentrator has no particular restriction so far as it is provided with a inner wall and a rotor blade having the aforementioned surface characteristic and can solidify a photographic waste solution without any trouble. In a preferred embodiment of the invention, however, the thin film evaporating concentrator includes a cylinder whose inner wall acts as a heating surface and the rotor blade configured so as to rotate, in the cylinder, about the central axis of the cylinder, and has a clearance of 0.1 to 1.0 mm between the heating surface and the rotor blade. In this concentrator, a photographic waste solution is formed into a thin film on the inner wall surface, and converted into powdery matter by undergoing a concentration process as it is evaporated under the action of mixing by stirring in addition to heating reaction. The cylinder is covered with a jacket for heat exchange around the periphery thereof, and has a photographic waste solution-feeding section on its upper side and a solidified powdery matter discharging section on its lower side or at its bottom. Further, the cylinder is fitted with a rotating shaft on its central axis, and a stirrerblade (alternatively described as a rotorblade) are attached to the rotating shaft, preferably so as to swing freely along the direction of the cylinder's circumference (at least in the opposite direction to a rotating direction of the rotating shaft). And the tip of the rotor blade is situated so close to the inner wall (heating surface) of the cylinder as to leave a minute clearance. The thin film formation in this minute clearance enables enhancement of concentration effect. The thin film evaporating concentrator thus configured is a preferred embodiment of the invention. In an especially preferred embodiment of the present thin film evaporating concentrator, the stirrer blade is mounted on the rotating shaft in a condition that the blade member is attached to a blade base (fixing member) with a blade member pin (joint) so that it can swing freely, and further an adjuster, such as a shim, is inserted between the stirrer blade and the rotating shaft at the time of assembly, thereby enabling adjustment of a minute clearance created for thin film formation between the blade member and the inner wall of the cylinder during the rotation of the stirrer blade inside the cylinder.

In the thin film evaporating concentrator mentioned above, a solution fed for treatment into the concentrator is spread thinly in a circumferential direction of the cylinder's inner wall as the heating member by means of the stirrer blade and falls down the heating member under its own weight as it is scraped off the heating member by means of the stirrer blade. In such a process, the solution for treatment is dried to solid matter and recaptured. As a result, each of the evaporation, concentration and drying steps is completed in a short time with efficiency, and so the solution thus treated is recaptured as good-quality solid matter without undergoing the undesirable secondary reaction as mentioned above. For accomplishing this treatment effectively, it is required to specify the thickness of the solution spread, or a space (clearance) between the heating member and the stirrer blade (the rotor blade), so that the layer of the solution to undergo the treatment can be formed uniformly on the internal surface of the cylinder and heated at the minimum temperature.

By specifying the clearance between the rotor blade and the heating member, the thickness of the thin film, which is a function of the rotating speed of the rotor blade and the feeding speed of the waste solution, is also determined and the thickness and dimensions of the thin film formed on the internal surface of the cylinder can be optimized with ease; as a result, each of evaporation, concentration and drying operations can be performed effectively in a short time and the waste solution can be recaptured as solid matter of good quality without undesirable secondary reaction, and besides, the apparatus can be structured in a reduced size.

Further by mounting a plurality of rotor blades on the rotating shaft so as to orient in the radius direction of the cylinder, the thin film of the solution to undergo treatment can be spread thinly and uniformly across the internal surface of the cylinder to result in satisfactory evaporation of volatile components of the thin film and smooth exfoliation of the thin film from the internal surface of the cylinder.

Furthermore by configuring a photographic waste solution treatment system equipped with the thin film evaporating concentrator so that the photographic waste solution is a treatment subject of the thin film evaporating concentrator, operations for evaporation, concentration and dehydration of the photographic waste solution can be performed at a time, the treatment for solidification can be achieved with efficiency and evolution of gases by decomposition can be prevented. Moreover, the treatment system as a whole can be structured in a compact size suitable for use in mini labs. In addition, the solid matter obtained can handle easily, e.g., at the time of conveyance and is readily soluble in water, so there is no harm in preparing a processing solution by reusing it or retreating it for recovery of silver by electrolysis.

And it is possible to configure the heating section of the concentrator so as to heat the thin film of a photographic waste solution at a temperature ranging from 60 to 150°C, preferably 65 to 130°C. Since the temperature distribution is narrow, the ingredients in a photographic waste solution undergo no decomposition even under the heating temperature of such a degree and the heating and evaporating treatment of a photographic waste solution can be performed with efficiency at a relatively high temperature. Decomposition of the ingredients begins at a temperature higher than about 50°C in conventional vessel-utilized evaporating concentrators for treatment of photographic waste solutions, but it has been found that in the present centrifugal force-utilized thin film evaporating concentrator the ingredients in a photographic waste solution can escape decomposing even when the temperature is set at such a high value.

The heating and evaporating operation by the heating member on the inside of the cylinder may be carried out under normal atmospheric pressure, but it is advantageously performed under a reduced pressure since the reduced pressure enables the proceeding of evaporation at lower temperatures and lessens the likelihood of overheating, thereby preventing deteriorationinsolidified matterqualityfromoccurring through thermal decomposition. The suitable degree of vacuum in the cylinder is from 10 to 80 Torr (from 1.33 to 10.64 kPa), preferably from 20 to 80 Torr (from 2.66 to 10.64 kPa).

Further, the photographic waste solution treatment system according to the invention can have a more compact size by being configured to feed a photographic waste solution at a favorable rate of from 0.1 to 5 liter/hour, but nevertheless the treatment system can have high treatment capability.

A typical embodiment of the present thin film evaporating concentrator is illustrated with drawings shown hereinafter.

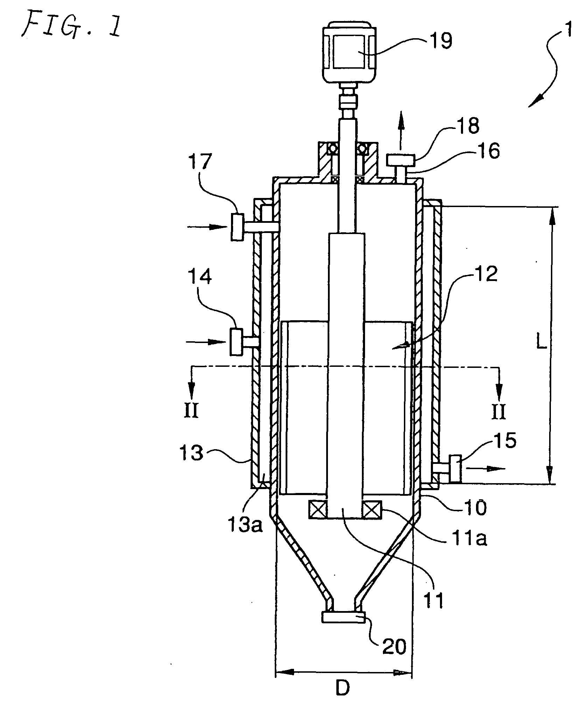

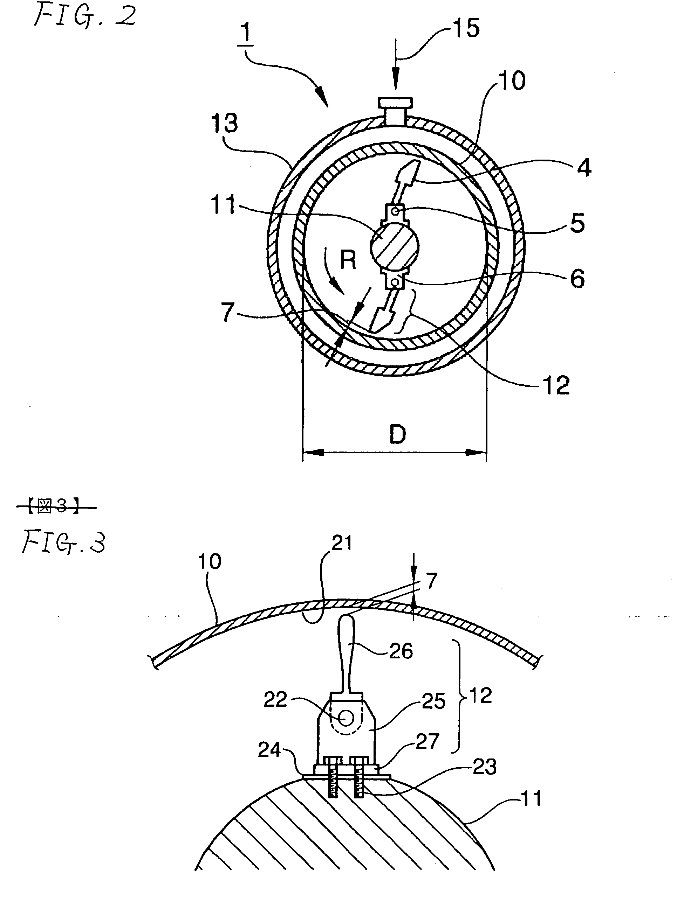

Fig. 1 is a cross-sectional diagram showing schematically the main part of a thin film evaporating concentrator according to this embodiment of the invention, and Fig. 2 is a drawing of a cross section appearing if the cylinder as a heating member of the apparatus shown in Fig. 1 is cut along the direction of the II-II line.

The thin film evaporating concentrator 1 shown in Fig. 1 is provided with a cylinder 10 as a heating member, a rotating shaft 11 which is placed in a vertical position at the center of the cylinder 10 and supported by a bearing 11a in a lower position, a plurality of rotor blades which are each disposed along the rotating shaft 11, and that so as to lengthen in the direction of the radius of the cylinder 10, a heating jacket 13 which is configured around the periphery of the cylinder 10 so as to correspond with the axial location in which the rotor blade 12 is installed, a heat medium inlet 14 which is supplied with a heat medium such as steam and opens into the internal space of the heating jacket 13, a heat medium outlet 15 for letting out the heat medium from the internal space of the heating jacket 13, a photographic waste solution intake 17 which is attached to the cylinder 10 so as to face onto the periphery of the cylinder 10 and provided with a photographic waste solution supply, a volatile matter outlet 16 which is attached to the cylinder 10 so as to situate at a position higher than the photographic waste solution intake 17 and allows a volatile component 18 in the photographic waste solution, inclusive of water, to escape in gaseous form, a motor 19 for driving the rotor blade 12 and the rotating shaft 11 into rotation, and an outlet 20 provided at the bottom of the cylinder for taking out solid ingredients in the photographic waste solution in solidified form.

The inner wall (SUS316) of the cylinder 10 is covered with a Teflon resin coating (not shown in the figures), and the water water contact angle which the coating forms with water is 94.9 degrees.

As shown in Fig. 2, the rotor blade 12 is provided with a fixing member 6 which is at right angles to the rotating shaft 11 and lengthens radially from the rotating shaft in the direction of the radius of the cylinder 10, and the blade member 4 which is attached to the tip of the fixing member 6 via a joint 5 and can swing along the direction of the cylinder's internal circumference so as to create a minute clearance 7 for forming thin film of a uniform thickness on the inner wall (or internal circumference) 21 of the cylinder 10. The surface of the fixing member 6 and the blade member 4 each is covered with a resin layer (not shown in the figures) formed by spraying a chemical agent for Teflon spray coating.

The heating jacket 13 heats around the periphery of the cylinder 10 (shown in Fig. 2) over the range of a length L (shown in Fig. 1) in the axial direction of the rotating shaft with the aid of a heat medium, such as steam, conducted from the heat medium inlet 14 into the internal space thereof and discharged from the heat medium outlet 15, thereby resulting in heating of the thin film of a photographic waste solution spread over the inner wall of the cylinder 10 having an inside diameter of D (shown in Fig. 2). The heating temperature of the inner wall is controlled to a range of 60°C to 150°C, preferably 65°C to 130°C. For its adoption in average-scale mini labs, the thin film evaporating concentrator 1 can be downsized through the miniaturization of the cylinder 10, e.g., by forming the heating jacket 13 so as to have a length L of 250 mm in the axial direction of the rotating shaft and the cylinder 10 so as to have an inside diameter D of 100 mm. The apparatus of such a scale can have a photographic waste solution-treating capacity of, e. g., 0.4 liter per hour.

Actions of a photographic waste solution treatment system using the thin film evaporating concentrator 1 as mentioned above are explained below.

When a photographic waste solution is poured into the photographic waste solution intake 17 in a state that a motor 19 in rotary motion is driving the shaft 11 into rotation, the photographic waste solution is led to the inner wall of the cylinder 10 and formed into a thin film spreading over the inner wall surface 21 with the aid of centrifugal force of such rotation. The photographic waste solution in the thin-film state is pressed onto the inner wall surface of the cylinder 10 along the blade member 4 of the rotor blade 12 in rotary motion with the aid of their centrifugal forces and retains its form as a thin film. The blade member 4 of the rotor blade 12 rotate in the rotating direction Rwhile slightly swinging to the d opposite irection to the rotating direction R shown in Fig. 2 and creating a minute clearance between the tip of the rotor blade and the inner wall surface of the cylinder 10. As a result, the photographic waste solution passes in a state of thin film through the clearance 7 created on the inner wall surface 21 of the cylinder 10 and flows vertically downward by gravitation. Therein, adhesion of a solidified waste solution to the inner wall of the cylinder 10 and to the rotor blade 12 does not occur.

The torque of the shaft 11 required for rotating the rotor blade 12 is 0.4 N· m when the inner wall of the cylinder 10 as a heatingmember of the present concentrator has an area of 785 cm$^2$.

In the evaporating concentrator shown in Fig. 1 and in Fig. 2, as the photographic waste solution flows down the inner wall surface 21 of the cylinder 10, it is brought to a state of thin film and heated by exchanging heat with a heat medium, such as steam, flowing through the heat jacket having a length L in the rotation axis direction; as a result, water as amajor volatile component thereof evaporates into steam in a short time with efficiency, moves upward and is discharged out of the volatile matter outlet 16. On the other hand, solid ingredients dissolved in the photographic waste solution flow down or remain on the inner wall surface of the cylinder 10 in a state of thin film as a result of short-time removal of the volatile matter including water from the photographic waste solution. The blade member 4 of the rotor blade 12 scraps this remaining thin film off the inner wall surface while rotating. And thereby the solid ingredients in the photographic waste solution are removed immediately from the inner wall by exfoliation, and fall to a lower part of the cylinder 10 as they are solidified and further pulverized in part. Thus, the solid ingredients in the photographic waste solution accumulate in flake, powder or lump form at the bottom of the cylinder 10. The solid ingredients thus accumulated can be discharged to the outside by taking out them from the outlet 20. In this way, evaporation, condensation and dehydration treatments of a photographic waste solution are effected in a short time to yield favorable results. Specifically, the ingredients solidified are resistant to thermal decomposition even when they are heated to a relatively high temperature of from 60 to 150°C and thereby the production of insoluble substances and decomposed gases is suppressed. Further, they are less prone to adhesion to the inner wall surface 21 of the cylinder 10.

In the foregoing treatment, the solid ingredients dissolved in the photographic waste solution can be solidified and the ingredients solidified are small in volume. So the handling of the solidified ingredients, including the conveyance thereof, is very easy. In addition, as mentioned above, the solidified ingredients are less prone to deterioration from thermal decomposition, so they resist producing water-insoluble substances and can dissolve with ease. Therefore, the processing composition reusing the solidified ingredients can keep a high level of quality. Moreover, the water vapor coming out of the volatile matter outlet 16 is cooled appropriately and can be treated as distilled water.

In accordance with the foregoing embodiment of the present photographic waste solution treatment system, the setting of a clearance 7 between each of the blade member 4 and the inner wall surface 21 of the cylinder 10 is chosen as mentioned above, and thereby it becomes easy to optimize the thickness and dimensions of a thin film of photographic waste solution. As a result, the processes of evaporating, concentrating and dehydrating the photographic waste solution can be done simultaneously in a short time with efficiency, and besides, an operation such as solidification of the photographic waste solution can be performed effectively without attended by undesirable secondary reaction, and the generation of insoluble substances and decomposed gases can be reduced. Moreover, the photographic waste solution treatment system can be configured in a compact size suitable for use in mini labs.

The rotor blade 12 shown in Fig. 1, incidentally, is structured in a single piece in the direction of the rotating shaft. However, it may be segmented in the direction of the rotating shaft and structured in two or more pieces. Instead of the heating jacket 13, on the other hand, heating elements such as electrical resistors may be disposed around the periphery of the cylinder 10 as far as the uniformity of temperature distribution is within acceptable limits. Further, with the aid of a pump a photographic waste solution may be introduced continuously or intermittently into the photographic waste solution intake 17 from a vessel in which the photographic waste solution is stored, or a vessel in which the photographic waste solution is stored may be disposed above the photographic waste solution intake 17, and thereby self-feeding of the photographic waste solution into the intake 17 may be carried out continuously or intermittently. Although no particular mention is made of the pressure in an evaporation chamber of the apparatus shown in Fig. 1, the photographic waste solution treatment may be performed under normal atmospheric pressure, or it may be performed under a reduced pressure by configuring the apparatus so as to connect a vacuum pump to the cylinder 10. The evaporation under a reduced pressure is preferable from the viewpoint of maintaining the quality of solidified substances because it enables rapid solidification at lower temperatures. In the case of promoting the evaporation by reducing the pressure, any negative pressure may be formed in the chamber. However, as mentioned hereinbefore, it is appropriate that the degree of vacuum be chosen from a range of 10 to 80 Torr (from 1.33 to 10.64 kPa), preferably 20 to 80 Torr (from 2.66 to 10.64 kPa).

Up to this point the invention is illustrated by its embodiments shown in Fig. 1 and Fig. 2. However, these illustrations should not be construed as limiting the scope of the invention, but various modifications can be made thereto. For instance, the present thin film evaporating concentrator is applicable also to treatment systems other than photographic waste solution treatment systems.

[Second Embodiment of Thin Film Evaporating Concentrator]

The second embodiment of the thin film evaporating concentrator is characterized by a clearance of 0.1 to 1.0 mm between the heating surface and the rotor blade. More specifically, this concentrator is an apparatus capable of concentrating a photographic waste solution into powdery matter through a concentration process that a thin film of the photographic waste solution is formed on the inner wall of the cylinder and concentrated by evaporation under the action of mixing by stirring in addition to heating reaction. The cylinder is covered with a jacket for heat exchange around the periphery thereof, and has a photographic waste solution-feeding section on its upper side and a solidified powdery matter discharging section on its lower side or at its bottom. Further, the cylinder is fitted with a rotating shaft on its central axis, and a stirrer blade (alternatively described as a rotor blade) is attached to the rotating shaft, preferably so as to swing freely along the direction of the cylinder's circumference (at least in the opposite direction to a rotating direction of the rotating shaft). And the rotor blade has its center of gravity in a position shifted to the periphery side of the cylinder, and the tip thereof is situated so close to the inner wall (heating surface) of the cylinder as to leave a minute clearance. The thin film formation in this minute clearance enables enhancement of concentration effect. The thin film evaporating concentrator configured as mentioned above is an embodiment of the invention. In an especially preferred embodiment of the present thin film evaporating concentrator, the stirrer blade is mounted on the rotating shaft in a condition that a blade member is attached to a blade base (fixing member) with a blade member pin (joint) so that it can swing freely, and further an adjuster, such as a shim, is inserted between the stirrer blade and the rotating shaft at the time of assembly, thereby enabling adjustment of a minute clearance created for thin film formation between the blade member and the inner wall of the cylinder during the rotation of the stirrer blade inside the cylinder.

In the thin film evaporating concentrator mentioned above, a solution fed for treatment into the concentrator is spread thinly in a circumferential direction of the cylinder's inner wall as the heating member by means of the stirrer blade and falls down the heating member under its own weight as it is scraped off the heating member by means of the stirrer blade. In such a process, the solution for treatment is dried to solid matter and recaptured. As a result, each of the evaporation, concentration and drying steps is completed in a short time with efficiency, and so the solution thus treated is recaptured as good-quality solid matter without undergoing the undesirable secondary reaction as mentioned above. For accomplishing this treatment effectively, it is required to specify the thickness of the solution spread, or a space (clearance) between the heating member and the stirrer blade (the rotor blade), so that the layer of the solution to undergo the treatment can be formed uniformly on the internal surface of the cylinder and heated at the minimum temperature.

And we have found that the thickness of the thin film of the waste solution, which is a function of the rotating speed of the rotor blade and the feeding speed of the waste solution, is determined by specifying the clearance between the rotor blade and the heating member, and the thickness and dimensions of the thin film formed on the internal surface of the cylinder can be optimized with ease; as a result, each of evaporation, concentration and drying operations can be performed effectively in a short time and the waste solution can be recaptured as solid matter of good quality without undesirable secondary reaction, and besides, the apparatus can be structured in a reduced size.

Further by mounting a plurality of rotor blades on the rotating shaft so as to orient in the radius direction of the cylinder, the thin film of the solution to undergo treatment can be spread thinly and uniformly across the internal surface of the cylinder to result in satisfactory evaporation of volatile components of the thin film and smooth exfoliation of the thin film from the internal surface of the cylinder.

Furthermore by configuring a photographic waste solution treatment system equipped with the thin film evaporating concentrator so that the photographic waste solution is a treatment subject of the thin film evaporating concentrator, operations for evaporation, concentration and dehydration of the photographic waste solution can be performed at a time, the treatment for solidification can be achieved with efficiency and evolution of gases by decomposition can be prevented. Moreover, the treatment system as a whole can be structured in a compact size suitable for use in mini labs. In addition, the solid matter obtained can handle easily, e.g., at the time of conveyance and is readily soluble in water, so there is no harm in preparing a processing solution by reusing it or retreating it for recovery of silver by electrolysis.

And it is possible to configure the heating section of the concentrator so as to heat the thin film of a photographic waste solution at a temperature ranging from 60 to 150°C, preferably 65 to 130°C. Since the temperature distribution is narrow, the ingredients in a photographic waste solution undergo no decomposition even under the heating temperature of such a degree and the heating and evaporating treatment of a photographic waste solution can be performed with efficiency at a relatively high temperature. Decomposition of the ingredients begins at a temperature higher than about 50°C in conventional vessel-utilized evaporating concentrators for treatment of photographic waste solutions, but it has been found that in the present centrifugal force-utilized thin film evaporating concentrator the ingredients in a photographic waste solution can escape decomposing even when the temperature is set at such a high value.

The heating and evaporating operation by the heating member on the inside of the cylinder may be carried out under normal atmospheric pressure, but it is advantageously performed under a reduced pressure since the reduced pressure enables the proceeding of evaporation at lower temperatures and lessens the likelihood of overheating, thereby preventing deterioration in solidifiedmatter quality from occurring through thermal decomposition. The suitable degree of vacuum in the cylinder is from 20 to 80 Torr (from 2.66 to 10.64 kPa), preferably from 40 to 80 Torr (from 5.32 to 10.64 kPa).

Further, the photographic waste solution treatment system according to the invention can have a more compact size by being configured to feed a photographic waste solution at a favorable rate of from 0.3 to 5 liter/hour, but nevertheless the treatment system can have high treatment capability.

A typical embodiment of the present thin film evaporating concentrator is illustrated with drawings shown hereinafter.

Fig. 1 is a cross-sectional diagram showing schematically the main part of a thin film evaporating concentrator according to this embodiment of the invention, and Fig. 2 is a drawing of a cross section appearing if the cylinder as a heating member of the apparatus shown in Fig. 1 is cut along the direction of the II-II line.

The thin film evaporating concentrator 1 shown in Fig. 1 is provided with a cylinder 10 as a heating member, a rotating shaft 11 which is placed in a vertical position at the center of the cylinder 10 and supported by a bearing 11a in a lower position, a plurality of rotor blades which are each disposed along the rotating shaft 11, and that so as to lengthen in the direction of the radius of the cylinder 10, a heating jacket 13 which is configured around the periphery of the cylinder 10 so as to correspond with the axial location in which the rotor blade 12 is installed, a heat medium inlet 14 which is supplied with a heat medium such as steam and opens into the internal space of the heating jacket 13, a heat medium outlet 15 for letting out the heat medium from the internal space of the heating jacket 13, a photographic waste solution intake 17 which is attached to the cylinder 10 so as to face onto the periphery of the cylinder 10 and provided with a photographic waste solution supply, a volatile matter outlet 16 which is attached to the cylinder 10 so as to situate at a position higher than the photographic waste solution intake 17 and allows a volatile component 18 in the photographic waste solution, inclusive of water, to escape in gaseous form, a motor 19 for driving the rotor blade 12 and the rotating shaft 11 into rotation, and an outlet 20 provided at the bottom of the cylinder for taking out solid ingredients in the photographic waste solution in solidified form.

As shown in Fig. 2, the rotor blade 12 is provided with a fixing member 6 which is at right angles to the rotating shaft 11 and lengthens radially from the rotating shaft in the direction of the radius of the cylinder 10, and a blade member 4 which is attached to the tip of the fixing member 6 via a joint 5 and can swing along the direction of the cylinder's internal circumference so as to create a minute clearance 7 for forming thin film of a uniform thickness on the inner wall 21 of the cylinder 10. The thickness of the blade member 4 on the cylinder side is greater than that on the rotating shaft side, so the blade member 14 has its center of gravity in a position sifted to the cylinder side. By giving it such a shape, the blade member 4 can scrape effectively the solidified matter of a waste solution off the cylinder's inner wall.

The heating jacket 13 heats around the periphery of the cylinder 10 (shown in Fig. 2) over the range of a length L (shown in Fig. 1) in the axial direction of the rotating shaft with the aid of a heat medium, such as steam, conducted from the heat medium inlet 14 into the internal space thereof and discharged from the heat medium outlet 15, thereby resulting in heating of the thin film of a photographic waste solution spread over the inner wall of the cylinder 10 having an inside diameter of D (shown in Fig. 2). The heating temperature of the inner wall is controlled to a range of 60°C to 150°C, preferably 65°C to 130°C. For its adoption in average-scale mini labs, the thin film evaporating concentrator 1 can be downsized through the miniaturization of the cylinder 10, e.g., by forming the heating jacket 13 so as to have a length L of 400 mm in the axial direction of the rotating shaft and the cylinder 10 so as to have an inside diameter D of 95 mm. The apparatus of such a scale can have a photographic waste solution-treating capacity of, e. g., 2 liters per hour.

Actions of a photographic waste solution treatment system using the thin film evaporating concentrator 1 are explained below.When a photographic waste solution is poured into the photographic waste solution intake 17 in a state that a motor 19 in rotary motion is driving the shaft 11 into rotation, the photographic waste solution is led to the inner wall of the cylinder 10 and formed into a thin film spreading over the inner wall surface 21 with the aid of centrifugal force of such rotation. The photographic waste solution in the thin-film state is pressed onto the inner wall surface of the cylinder 10 along the blade member 4 of the blade 12 in rotary motion with the aid of their centrifugal forces and retains its form as a thin film. The blade member 4 of the rotor blade 12 rotate in the rotating direction R while slightly swinging to the direction opposite to the rotating direction R shown in Fig. 2 and creating a minute clearance between the tip of the rotor blade and the inner wall surface of the cylinder 10. As a result, the photographic waste solution passes in a state of thin film through the clearance 7 created on the inner wall surface 21 of the cylinder 10 and flows vertically downward by gravitation.

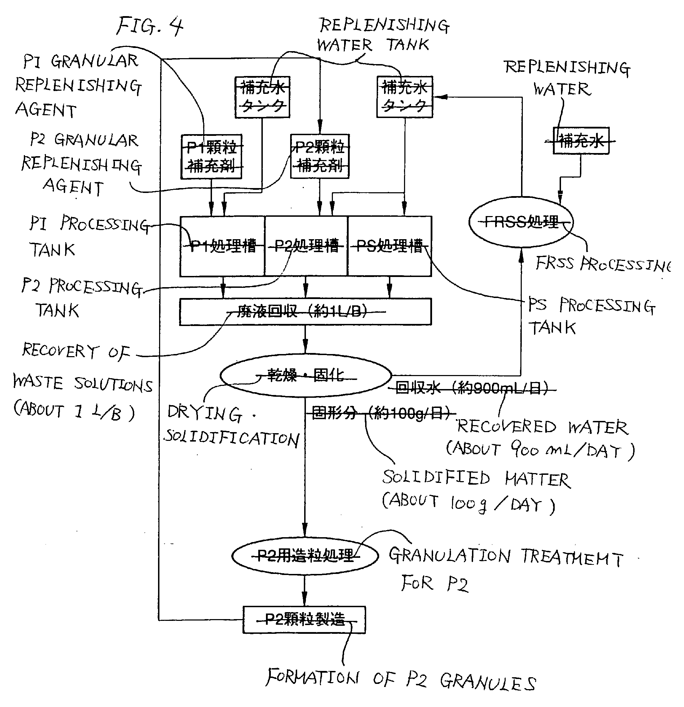

In Fig. 3, a stirrer blade 12 having a different shape from but the same function as the stirrer blade 12 shown in Fig. 2 is shown together with the rotating shaft 11 and the inner wall surface 21 of the cylinder 10. As illustrated in Fig. 3, a blade member 2 6 is attached to a fixing member 25 of the rotor blade 12 via a pin 22 so as to permit swinging and a clearance 7 for formation of a thin film is established between the rotor blade tip and the cylinder' s inner wall 21 as a heating surface.

In the evaporating concentrator shown in Fig. 1 to Fig. 3, as the photographic waste solution flows down the inner wall surface of the cylinder 10, it is brought to a state of thin film and heated by exchanging heat with a heat medium, such as steam, flowing through the heat jacket having a length L in the rotation axis direction; as a result, water as amajor volatile component thereof evaporates into steam in a short time with efficiency, moves upward and is discharged out of the volatile matter outlet 16. On the other hand, solid ingredients dissolved in the photographic waste solution remain on the inner wall surface of the cylinder 10 in a state of thin film as a result of short-time removal of the volatile matter including water from the photographic waste solution. Each of the blade members 4 or 26 of the rotor blade 12 scraps this remaining thin film off the inner wall surface while rotating and giving impacts effectively to the solid ingredients owing to a shift of its center of gravity to the cylinder side. And thereby the solid ingredients in the photographic waste solution are removed immediately from the inner wall by exfoliation, and fall to a lower part of the cylinder 10 as they are solidified and further pulverized in part. Thus, the solid ingredients in the photographic waste solution accumulate in flake, powder or lump form at the bottom of the cylinder 10. The solid ingredients thus accumulated can be discharged to the outside by taking out them from the outlet 20. In this way, evaporation, condensation and dehydrationtreatmentsofaphotographic waste solution are effected in a short time to yield favorable results. Specifically, the ingredients solidified are resistant to thermal decomposition even when they are heated to a relatively high temperature of from 60 to 150°C and thereby the production of insoluble substances and decomposed gases is suppressed. Further, they are less prone to adhesion to the inner wall surface 21 of the cylinder 10.

In the foregoing treatment, the solid ingredients dissolved in the photographic waste solution can be solidified and the ingredients solidified are small in volume. So the handling of the solidified ingredients, including the conveyance thereof, is very easy. In addition, as mentioned above, the solidified ingredients are less prone to deterioration from thermal decomposition, so they resist producing water-insoluble substances and can dissolve with ease. Therefore, the processing composition reusing the solidified ingredients can keep a high level of quality. Moreover, the water vapor coming out of the volatile matter outlet 16 is cooled appropriately and can be treated as distilled water.

In accordance with the foregoing embodiment of the present photographic waste solution treatment system, the setting of a clearance 7 between the blade member 4 and the inner wall surface 21 of the cylinder 10 is chosen as mentioned above, and thereby it becomes easy to optimize the thickness and dimensions of a thin film of photographic waste solution. As a result, the processes of evaporating, concentrating and dehydrating the photographic waste solution can be done simultaneously in a short time with efficiency, and besides, an operation such as solidification of the photographic waste solution can be performed effectively without attended by undesirable secondary reaction, and the generation of insoluble substances and decomposed gases can be reduced. Moreover, the photographic waste solution treatment system can be configured in a compact size suitable for use in mini labs.

The rotor blade 12 shown in Fig. 1, incidentally, is structured in a single piece in the direction of the rotating shaft. However, it may be segmented in the direction of the rotating shaft and structured in two or more pieces. Instead of the heating jacket 13, on the other hand, heating elements such as electrical resistors may be disposed around the periphery of the cylinder 10 as far as the uniformity of temperature distribution is within acceptable limits. Further, with the aid of a pump a photographic waste solution may be introduced continuously into the photographic waste solution intake 17 from a vessel in which the photographic waste solution is stored, or a vessel in which the photographic waste solution is stored may be disposed above the photographic waste solution intake 17 and thereby continuous introduction of the photographic waste solution into the intake 17 may be carried out spontaneously. Although no particular mention is made of the pressure in an evaporation chamber of the apparatus shown in Fig. 1, the photographic waste solution treatment may be performed under normal atmospheric pressure, or it may be performed under a reduced pressure by configuring the apparatus so as to connect a vacuum pump to the cylinder 10. The evaporation under a reduced pressure is preferable from the viewpoint of maintaining the quality of solidified substances because it enables rapid solidification at lower temperatures. In the case of promoting the evaporation by reducing the pressure, any negative pressure may be formed in the chamber. However, as mentioned hereinbefore, it is appropriate that the degree of vacuum be chosen from a range of 20 to 80 Torr (from 2.66 to 10.64 kPa), preferably 40 to 80 Torr (from 5.32 to 10.64 kPa).

Up to this point the invention is illustrated by its embodiments shown in Fig. 1, Fig. 2 and Fig. 3. However, these illustrations should not be construed as limiting the scope of the invention, but various modifications can be made thereto. For instance, the present thin film evaporating concentrator is applicable also to treatment systems other than photographic waste solution treatment systems.

Incidentally, the thin film evaporating concentrator may has both of the characteristic of the first embodiment and the characteristic of the second embodiment.


<<Photographic Waste Solution Reuse System>>

The following sections detail concretely a photographic waste solution reuse system according to the invention.

The reuse of waste solutions in a photographic processing system relating to the invention is illustrated by reference to Fig. 4. Fig. 4 is a chart showing a typical flow of waste solutions for reuse in a photographic processing system relating to the invention.

In the typical case shown in Fig. 4 (a color photographic printing paper-processing and processing solutions-reusing system), photographic processing of photosensitivematerialsafterexposuretolightincludes a first step of carrying out color development processing in a processing tank P1, a second step of carrying out bleach-fix processing in a processing tank P2, a third step of carrying out wash processing in a processing tank PS and a final step of drying the photosensitive materials. As mentioned above, a color developer (P1), a bleach-fix bath (P2) and a rinsing bath (PS) are replenished with their respective replenishing agents in given amounts at every time when the processing quantity of photographic materials amounts to a predetermined value. In Fig. 4, the processing solutions P1 and P2 are replenished by granular replenishing agents being charged into their respective processing tanks and dissolved with replenishing water.

In the invention, waste solutions are recovered from their respective processing tanks, and solidified. For solidifying the waste solutions, a thin film drying apparatus as mentioned above is adopted. A bleach-fix bath contains ammonium salts and sulfites, so the reduced-pressure distillation method hitherto utilized is undesirable because it causes excessive heat application to the waste bleach-fix solution and entails a fear of evolving gases by decomposition of those salts. On the other hand, the solidification using the thin film drying apparatus has less possibility of evolving decomposed gases than the reduced-pressure distillation method because the thin film drying apparatus is less prone to apply excessive heat, and besides, according to our finding, the solid processing chemicals regenerated by use of the thin film drying apparatus have an effect of retarding contamination of photosensitive materials when they are used in continuous photographic processing. As the thin film drying apparatus, a thin film evaporator of stirrer type, for example, Hi-Evaporator made by Sakura Seisakusho Co., Ltd., can be used. In addition, the water vapor generated during the solidification of waste solutions is liquefied by means of an appropriate condenser and can be used as dilution water of a bleach-fix processing bath (P2) or for a rinsing bath (PS). Further, the liquefied water can be utilized for cleaning P2-PS crossover rollers.

The solidified waste solution is regenerated as solid processing chemicals. The solid processing chemicals may be left as they are in powdery state (powder) as mentioned hereinafter, or they may be formed into tablets or granules. In the case of granules, internal particles (referred to as nuclei or cores) are formed first, and then a covering layer (shell layer) is provided on each of the internal particles. The covering layer may include a coating of protective material for stabilizing the internal particles. In the case shown in Fig. 4, the regenerated solid processing chemicals are used as a bleach-fix processing agent (P2).

The spent beach-fix bath may be evaporated and solidified without removal of silver ions, and may be reused in its entirety as solid processing chemicals. When the photographic processing is carried out in such a form, however, the silver ion concentration in the processing solution is increased to result in retardation of silver removal from photosensitive materials. Therefore, the suitable reuse rate of the waste solution is from 50% to 90%, preferably from 60% to 85%. The term "reuse rate" as used herein refers to a proportion of the weight (mass) of solidified matter obtained from photographic waste solutions and reused as a replenishing agent to the total weight of solidified matter obtained from photographic waste solutions, and it is defined by the following equation:

$$\text{Reuse rate (\%)} = [(\text{amount (g) of replenishing}$$

$$\text{agent-incorporated portion of solidified matter obtained}$$

$$\text{from photographic waste solutions}) \div (\text{total amount (g)}$$

$$\text{of solidified matter obtained from photographic waste}$$

$$\text{solutions})] \times 100$$

Incidentally, the portion of the solidified matter not reused as solid processing chemicals is disposed of in known ways. For instance, it is advantageous for such a portion to undergo certain treatments, such as anaerobic fermentation and aerobic fermentation, and thereby silver sulfide and sulfur are recovered and the residue is used as fertilizer for lawn. Eventually, the remaining portion is electrolyzed to an ecologically safe level and then discharged into sewerage.

<<Methods for Solidification>>

The present processing chemical composition for reuse may have any of the forms of powder, granules and pellets. Although the case of reusing a bleach-fix composition is shown in Fig. 4, another processing chemical, such as a replenishing agent for color development, can also be reused in accordance with the invention. The suitable form of the processing chemical composition for reuse is a powder or granule form.
The powder processing chemical is a powdery composition prepared by, e.g., pulverizing its ingredients each and, if needed, further grinding each of the pulverized ingredients for particle-size adjustment, and then mixing them as powder source materials in the ratio specified by a given formula, or by dissolving its ingredients in a solvent such as water and pulverizing the solution by an appropriate drying operation, e.g., with a spray dryer.
The powder processing chemical can be used in, e.g., a method of replenishing the processing tank of a developing machine directly with solid matter obtained by evaporating and solidifying solutions wasted by photographic processing and further with new processing chemicals at intervals to maintain the processing bath' s quality, a method of regenerating the solidified matter as a powder processing chemical by mixing it with new processing chemicals (or source chemicals) and, if needed, grinding the mixture into powder, or a method of dissolving the solidified matter in water again, recovering silver from the solution, drying and solidifying the residue again and then reusing the thus solidified matter directly or as a mixture with new source chemicals.
The pellet-form processing chemical can be prepared by pulverizing its ingredients each and, if needed, adjusting their respective particle sizes by grinding, and then mixing them as powdery source materials in the ratio specified by a given formula, and further forming the mixture into pellets. Alternatively, it may be prepared using a method of dissolving its ingredients in water, pulverizing the solution by an appropriate drying operation, such as a spray-drying operation, and then forming the pulverized matter into pellets. For attainment of mechanical strength and stability, an appropriate binder may be added, if desired. Examples of a binder usable for such a purpose include water-soluble binders, such as polyvinyl alcohol and methyl cellulose, and the binders disclosed in JP-A-5-333507, paragraph 0066.
The pellet-form processing chemicals can also be prepared utilizing the general methods disclosed, e.g., in JP-A-51-61837, JP-A-54-155038, JP-A-52-88025 and UK Patent No. 1,213,808. In addition, pellets can be formed by any of the granulation processes (2), (4), (5) and (6), especially (2) and (4), described in Zouryu Handbook, which are mentioned below as the granulation processes for granular processing chemicals.
The pellets are not particularly restricted in their shapes, but they may have any of a spherical shape, a tabular shape, a disk shape and an indefinite shape. In addition, their sizes are not particularly restricted so long as they can be handled with ease. However, it is appropriate that their major axes be from 5 to 30 mm, preferably from 8 to 20 mm.
The granular processing chemicals can be prepared by the general methods disclosed, e.g., in JP-A-2-109042, JP-A-2-109043, JP-A-3-39735 and JP-A-3-39739.
The term "spherical granules" as used in the invention refers to the particles obtained by granulating powder in a spherical form. The spherical form may be a true sphere, or it needn't be a true sphere. Specifically, the spherical form may also include the particle forms generally referred to as pellet, pill and bead forms. It is appropriate in the invention using the thin film evaporating concentrator of the first embodiment that the average size of the granules is from 0.1 to 10 mm, preferably from 0.2 to 8 mm, particularly preferably from 0.3 to 5 mm. And also in case of the invention using the thin film evaporating concentrator of the second embodiment, it is appropriate that the average size of the granules is from 0.1 to 10 mm, preferably from 0.2 to 8 mm, particularly preferably from 0.3 to 5 mm.

As to the internal structure of granule-form solid processing chemicals, granules of a core/shell structure and granules of a multilayer structure are preferred in the invention. These structures have an advantage in that a consolidation- or deliquescence-resistant ingredient can be applied as a surface coating.

Details of preparation methods for granule-form solid processing chemicals are described in JP-A-2001-183779 and JP-A-2001-183780.

The granules can be formed variously in shape. For instance, they can be of a spherical, columnar, prismatic or indefinite shape. The suitable average size of such granules is from 0.1 to 10 mm, preferably from 0.2 to 8 mm, particularly preferably from 0.3 to 5 mm.

In the invention, granules can be formed using a wide variety of known granulation processes including processes of forming granules of a core/shell structure or a multilayer structure. Various granulation processes applicable to the invention are described in Zouryu Handbook (compiled by Nippon Funtai Kogyo Gijutu Kyokai, which is named "The Association of Powder Process Industry and Engineering, JAPAN" in English), and publications including JP-A-4-221951 and JP-A-2-109043. Of those processes, the following typical granulation processes are preferred. However, the processes usable in the invention should not be construed as being limited thereto.

(1) Rolling granulation process (Zouryu Handbook, page 133)

A granulation process in which a solution (binder) is sprayed onto a feedstock powder while rolling the powder in a rotating container, such as a rotating drum or dish, and the powder is progressing rapidly with coalescence as the interfacial energy is used as an impetus to the coalescence, resulting in formation of granules.

(2) Compression granulation process (Zouryu Handbook, page 199)

Aprocess referred to as "briquette process" in which a feedstock powder undergoes molding granulation through compression and molding between two revolving rolls on the surfaces of which briquette pockets are carved, or a process referred to as "compacting process" in which a feedstock powder is formed into surface-smoothed platy flakes and then the flakes are crushed.

(3) Agitation granulation process (Zouryu Handbook, page 379)

Aprocess of performing granulation via coalescence, wherein a forced flow motion is given to a feedstock powder by use of agitation blades installed in a container as a solution is sprayed onto the powder, thereby causing coalescence.

(4) Extrusion granulation process (Zouryu Handbook, page 169)

A process of granulating a feedstock by extrusion from pores of a die or screen. As an extrusion mechanism, a screw, roll, blade, self-forming or ram mechanism can be used.

(5) Crush granulation process (Zouryu Handbook, page 349)

There are a dry process and a wet process. In a dry process, the briquettes or compact flakes obtained using the foregoing compression granulation process are crushed into granules. In a wet process, on the other hand, the powdery material is humidified in advance, then kneaded and further crushed into granule. In both processes, fragmentation by compression crushing is performed by application of impact with a hammer or shear with a cutter, or by use of a rough-toothed rolls or waveform rolls.

(6) Fluidized-bed granulation process (Zouryu Handbook, page 283)

A granulation process involving an operation of spraying a powder with a binder while keeping the powder in a state of being suspended in a fluid blowing upward from the underside. Although this operation belongs to a unit operation referred to as fluidization, it is also possible to use a multifunctional fluidized-bed granulator in which this unit operation is combined with rolling and agitating actions.

(7) Coating granulation process (Zouryu Handbook, page 409)

A granulation process in which particles bearing sprayed solutions of coating substances and a binder on

EP 1 519 225 A2

their individual core surfaces are made to adhere to one another. Examples of a coating method usable therein include pan coating carried out under rolling with a rotating drum, rolling coating carried out under rolling with a rotating disk, fluidized-bed coating carried out forming a fluidized bed by airflow, and centrifugal flow coating carried out setting up a planetary motion by use of centrifugal force generated by rotation of a rotor and slit air.

(8) Fusion granulation process (Zouryu Handbook, page 227)

A process of injecting a material in a fused state or dropping it onto a plate, thereby cooling and solidifying the fused material in the form of fine particles or flakes.

(9) Atomization-drying granulation process (Zouryu Handbook, page 249 page)

A granulation process which involves atomizing a solution, paste or suspension in hot-air stream on the inside of a drying tower and, at the same time, evaporating the moisture, thereby forming dried particles.

(10) Liquid-phase granulation process (Zouryu Handbook, page 439)

A capsule granulation process known as a process of producing microcapsules. Specifically, an interfacial polymerization process, anin-solution cured coating process, an emulsion process, a contents exchange process and a spray drying process are known.

(11) Vacuum freeze granulation process (Zouryu Handbook, page 469)

A method of forming granular matter from a moist material incapable of retaining a granule form at room temperature by utilizing frozen state (solidification by cooling).
In the invention, it is appropriate that the solidified matter obtained by the foregoing thin film evaporating solidification be used as the granule core just as it is. And it is preferable that the coating on the granule core is performed according to the rolling granulation process, the fluidized-bed granulation process or the coating granulation process. In particular, the coating granulation process using a centrifugal-flow coating machine is preferred because it can produce the foregoing effect with efficiency. Examples of a coating material include source chemicals added newly to the solidified matter for preparing a regenerated processing chemical, and materials having a high equilibrium relative humidity (coating materials described below) to reduce hygroscopicity of the particle surface of the solidified matter.
To the surfaces of granules composed entirely of solidified matter prepared by thin film evaporating solidification, and to the surfaces of granules formed so as to have a core/shell structure according to a process as mentioned above, it is preferable to add water-soluble polymer coatings. In the invention, the granular processing chemical prepared by adding such coatings to the granules composed entirely of solidified matter prepared by the evaporative solidification is also included in the granular chemicals of core/shell structures. The water-soluble polymers for coating use have no particular restriction as to their kinds, but one or more polymers selected from synthetic, semi-synthetic or natural water-soluble macromolecular substances can be used. Examples of such macromolecular substances include gelatin, pectin, polyacrylic acid, polyacrylates, polyvinyl alcohol, modified polyvinyl alcohol, polyvinyl pyrrolidone, vinyl pyrrolidone-vinyl acetate copolymer, polyethylene glycol, sodium salt of carboxymethyl cellulose, hydroxypropylmethyl cellulose, hydroxyethyl cellulose, hydroxypropyl cellulose, methyl cellulose, ethyl cellulose, alginates, xanthan gum, gum arabic, tragacanth gum, karaya gum, carrageenan, and methyl vinyl ether-maleic anhydride copolymer. Of these macromolecular substances, polyethylene glycol, polyvinyl pyrrolidone, hydroxypropyl cellulose, methyl cellulose, gum arabic and carrageenan are preferably used alone or in combination of two or more thereof.
The amount of water-soluble polymer coated has no particular limitation so far as it is within the range of usual coatings. However, the suitable proportion of such a coating to each granule is from 0.001 to 10% by weight, particularly 0.01 to 5% by weight. As a method for coating water-soluble polymers, any methods can be used without particular restrictions. However, it is preferable to use the rolling granulation process, the agitation granulation process, the fluidized-bed granulation process, the coating granulation process, the fusion granulation process or the atomization-drying granulation process. As to these processes, it is particularly advantageous to adopt a method of spray-coating the surface of each granule with an aqueous polymer solution having its concentration in the range of 1 to 50% in accordance with the rolling, fluidized-bed, coating or atomization granulation process, and then drying the polymer coating.
In the present system, the regenerated processing chemical prepared from solidified matter obtained by the evaporating solidification is stored in a container except when it is used on-site. The container usable for the solid processing chemical has a bag or bottle form, and its packaging material may be any of paper, plastic and metal. From the viewpoint of loads on the environment, however, bag-form and bottle-form containers made of paper or plastic films, especially containers made of biodegradable plastics, are used to advantage. Examples of a biodegradable plastic usable therein include hydroxybutyrate-hydroxyvalerate copolymer, aliphatic polyester, and polylactic acid. Further, barrier materials for packaging use are used to advantage from the viewpoint of various kinds of stability. In particular, plastic materials having oxygen permeability of 200 mL/m$^2$•24hrs•Pa or below are favorable. Incidentally, the oxygen permeability coefficient can be determined by the method described in N.J. Calyan, O$_2$ Permeation of Plastic Container, Modern Packing, pp. 143-145 (Dec. 1968). Examples of a plastic material suitable for packaging include polyvinylidene chloride (PVDC) , nylon (NY) , polyethylene (PE), polypropylene (PP), polyester (PES), ethylene-vinylacetatecopolymer (EVA), ethylene-vinyl alcohol copolymer (EVAL), polyacrylonitrile (PAN), polyvinyl alcohol (PVA) and polyethylene terephthalate (PET). For the purpose of reducing oxygen permeability, it is ef fective to use PVDC, NY, PE, EVA, EVAL and PET.

In using a packaging material for granular processing chemicals, the material is molded into a film, bag or bottle form. When a solid photographic processing chemical is packaged in a barrier film, the film thickness adequate for protecting the processing chemical from moisture is in the range of 10 to 150 μm. The barrier film suitable for such packaging use may be a simple material or a composite material made up of at least one or more materials selected from among polyethylene terephthalate film, polyolefin film such as polyethylene or polypropylene film, kraft paper to which moisture resistance can be imparted by polyethylene, waxed paper, moisture-resistant cellophane, glassine paper, polyester film, polystyrene film, polyvinyl chloride film, vinylidene chloride-maleic acid copolymer film, polyvinylidene chloride film, polyamide film, polycarbonate film, acrylonitrile resin film, metal foil such as aluminum foil, and metallized polymer film.

More specifically, high barrier (highly shielding) film packaging materials made of composite materials, such as (1) a composite of polyethylene terephthalate and low-density polyethylene, (2) a composite of vinylidene chloride-maleic acid copolymer-coated cellophane and low-density polyethylene, (3) a composite of polyethylene terephthalate, vinylidene chloride-maleic acid copolymer and low-density polyethylene, (4) a composite of nylon and low-density polyethylene, (5) acompositeoflow-densitypolyethylene, vinylidene chloride-maleic acid copolymer and low-density polyethylene, (6) a composite of nylon, EPEARL and low-density polyethylene, (7) a composite of polyethylene terephthalate, EPEARL and low-density polyethylene and (8) aluminum-evaporated polyethylene terephthalate, can be used to particular advantage from the viewpoints of high imperviousness to water, gas and light, ruggedness and flexible sealing capability. As these high-barrier packaging materials, the materials described in Kinousei Housouzairyou no Shintenkai (which might be translated "New Development of Functional Packaging Materials"), Toray Research Center (February, 1990), can be used.

The materials for the container having low oxygen permeability and low water-vapor permeability as disclosed in JP-A-63-17453, and the vacuum packaging materials disclosed in JP-A-4-19655 and JP-A-4-230748 can also be used as suitable container materials.

It is also possible to make the solid processing chemicals usable in the present system available for photographic processing in a mode of being loaded in an automatic developing machine as it is kept in a container. The container suitably used in such a case is a container made from, as a single constituent resin, high-density polyethylene (abbreviated as"HDPE" hereinafter) having a density of 0.941 to 0.969 and a melt index of 0.3 to 5.0g/10min. Thepreferable density of polyethylene used as the constituent resin is in the range of 0.951 to 0.969, especially in the range of 0.955 to 0.965, and the preferable melt index thereof is in the range of 0.3 to 4.0 g/10 min. These melt index values are values determined under a load of 2.16 kg at a temperature of 190°C in accordance with the method defined in ASTM D1238. The suitable thickness of this container is from 500 to 1,500 μm. However, the containers for processing chemicals usable in the present system should not be construed as being limited to the foregoing HDPE containers convenient for loading in a developing machine, but other containers for general-purpose use, including the containers made from polyethylene terephthalate (PET), polyvinyl chloride (PVC), low-density polyethylene (LDPE) and HDPE whose density and melt index are out of the aforementioned ranges, can also be used.

<<Processing Steps>>

Next the processing steps relating to the invention are described. The photographic processing to which the invention is applicable includes a color developing step, a desilvering step, a washing step or a step of using a stabilizing bath, and a drying step. Further, an auxiliary step, such as a rinsing step, an intermediate washing step or a neutralizing step, may also be inserted in each individual interval between two successive steps. The desilvering step is carried out with a bleach-fix bath. In addition to the stabilizing bath as an alternative to water used in the washing step, a processing bath for image stabilization can be inserted between the step of using washing water or a stabilizing bath and the drying step. In the case of black-and-white photographic materials, the photographic processing include a developing step, a fixing step, a washing step and a drying step, and an auxiliary step, such as an intermediate washing step including rinsing, or a neutralizing step, can also be inserted in each individual interval between two successive steps. The processing method adopted in the invention may be any of processing methods of rapid development type, low replenishment rate type and internationally compatible standard type.

The color development step is an immersion-in-bath processing step in which photosensitive materials are immersed in a developing bath, and the developing bath is an alkaline continuous-phase liquid containing its ingredients in a dissolved state. A developer and a replenisher for the developer are prepared and used in a development tank and a replenishment tank, respectively.

<<Photographic Processing Solutions>>

Each of photographic processing waste solutions to which the present invention is applicable contains ingredients of each photographic processing solution as its main component. In addition to the ingredients constituting each photographic processing solution, the photographic processing waste solution contains reaction products formed in the process of photographic processing, such as oxidation products of developing agents, sulfates and halides, and trace quantities of gelatin, sensitizing dyes and surfactants eluted from photosensitive materials.

Photographic processing solutions are used in processing of color photosensitive materials and black-and-white photosensitive materials. Examples of color photosensitive materials which can be processed in the present system include color paper, color reversal paper, color negative film for taking use, color reversal film, negative or positive film for motion picture use and direct positive color photosensitive materials, and examples of black-and-white photosensitive materials which can be processed include X-ray film, photosensitive materials for graphic arts, microfilm and black-and-white film for taking use.

Explanations of photographic processing solutions used for photographic processing, inclusive of the bleach-fix bath and the bleach-fix bath replenisher prepared from the solid processing composition according to the invention, are made below.

The photographic processing solutions include a color photographic processing solution, a black-and-white photographic processing solution, a reducer incident to photomechanical process operations and a development-processing tank cleaning solution. More specifically, they include a black-and-white developer, a color developer, a fixing bath, a bleaching bath, a bleach-fix bath and an image stabilization bath.

The color developer generally contains an aromatic primary amine color-developing agent as a main component. The color-developing agent is a p-phenylenediamine derivative for the most part. Typical examples of such a derivative include N,N-diethyl-p-phenylenediamine, 2-amino-5-diethylaminotoluene, 2-methyl-4-[N-ethyl-N-(β-hydroxyethyl)amino]aniline, and N-ethyl-N-(β-methanesulfonamidoethyl)-3-methyl-4-ami noaniline. These p-phenylenediamine derivatives can also take the form of salts, such as sulfates, hydrochlorides, sulfites and p-toluenesulfonates. The content of such an aromatic primary amine developing agent in a developer is from about 0.5 g to about 10 g per liter.

The black-and-white developer (first developer of color reversal processing) contains 1-phenyl-3-pyrazolidone, 1-phenyl-4-hydroxymethyl-4-methyl-3-pyrazolidone, N-methyl-p-aminophenol or its sulfate, or hydroquinone or its sulfonate.

The color and black-and-white developers generally contain as preservatives sulfites, such as sodium sulfite, potassium sulfite, sodium hydrogen sulfite, potassium hydrogen sulfite, sodium metabisulfite and potassium metabisulfite, or carbonyl-sulfite adducts. The content of these preservatives in the color developer is 5 g/l or below, mostly 3 g/l or below (inclusive of zero) , and that in the black-and-white developer is from 0 to 50 g/l.

Further, the color and black-and-white developers can contain various hydroxylamines as preservatives. The hydroxylamines used therein may have substituents or not. The substituted hydroxylamines include hydroxylamines having lower alkyl substituents on their respective nitrogen atoms, especially two lower (1-3C) alkyl substituents per nitrogen, namely N,N-dialkylhydroxylamines. These N,N-dialkylhydroxylaminescanalsobeusedincombination with alkanolamines, such as triethanolamine. The content of hydroxylamines is 0 to 5 g per liter of developer.

The color and black-and-white developers are adjusted to the pH range 9-12. For keeping the developers within such a pH range, various kinds of buffering agents are used. Examples of buffering agents usable for such a purpose include carbonates, phosphates, borates, tetraborates, hydroxybenzoates, glycine salts, N,N-dimethylglycine salts, leucine salts, norleucine salts, guanine salts, 3,4-dihydroxyphenylalaninesalts, alanine salts, aminobutyrates, 2-amino-2-methyl-1,3-propanediol salts, valine salts, proline salts, trishydroxyaminomethane salts and lycine salts. In most cases, carbonates, phosphates, tetraborates or/and hydroxybenzoates are used as buffering agents because of their advantages that they have high solubility and excellent buffering capability in the high pH range of 9.0 or above, exert no bad influences (e.g., fogging) on photographic properties when added to developers, and are inexpensive. The amount of buffering agents added to a developer is generally from. 0.1 to 1 mole per liter of developer.

Further to the developers, various kinds of chelating agents can be added as calcium and magnesium precipitation inhibitors or for enhancement of developer stability. Typical examples of chelating agents used for such purposes include nitrilotriacetic acid, diethylenetriaminepentaacetic acid, nitrilo-N,N,N,-trimerimethylenephosphonic acid, ethylenediamine-N,N,N',N'-tetramethylenephosphonic acid, 1,3-diamino-2-propanoltetraacetic acid, trans-cyclohexanediaminetetraacetic acid, 1,3-diaminopropanetetraacetic acid, 2-phosphonobutane-1,2,4-tricarboxylic acid, and 1-hydroxyethylidene-1,1-diphosphonic acid. Two or more of these chelating agents may be used in combination, if desired.

The developers contain various development accelerators. Examples of development accelerators usable herein include thioether compounds, p-phenylenediamine compounds, quaternary ammonium salts, p-aminophenols, amine compounds, polyalkylene oxides, 1-phenyl-3-pyrazolidones, hydrazines, meso-ion compounds, thione compounds and imidazoles.

Many of color developers for color paper use contain alkylene glycols and benzyl alcohols in addition to the above-recited color developing agents, sulfites, hydroxylamines, carbonates and water softeners. On the other hand, developers for color negative, developers for color positive and some developers for color paper are free of those alcohol compounds.

In many cases, developers contain bromide ions for the purpose of fog prevention. On the other hand, there are cases where bromide-free developers are used on silver chloride-based sensitive materials. In addition, there may be cases where developers contain as inorganic antifoggantscompoundscapableofprovidingchlorideions, such as NaCl and KCl. Alternatively, there are many cases where developers contain organic antifoggants of various types. Examples of such organic antifoggants include adenines, benzimidazoles, benzotriazoles and tetrazoles. The content of antifoggants as recited above is from 0.010 g to 2 g per liter of developer. Therein are also included antifoggants eluted from sensitive materials during development and accumulated in the developer. In accordance with the invention, a waste solution mixture containing halide ions, such as chloride and bromide ions, in total concentration of 1 millimole or more per liter can be treated effectively. In particular, the present treatment is effective for the cases where waste mixtures contain bromide ions in concentration of 1 millimole or more per liter.

Furthermore, the developers contain various types of surfactants, such as alkylphosphonic acids, arylphosphonic acids, aliphatic carboxylic acids and aromatic carboxylic acids.

In the black-and-white photographic processing, fixation processing is carried out after development processing. In the color photographic processing, on the other hand, bleach processing is usually carried out between development processing and fixation processing, but bleach-fix (blix) processing, or simultaneous processing for bleach and fixation, is carried out in some cases. A bleaching bath contains as an oxidizing agent a Fe(III) or Co (III) salt of EDTA, diethylenetriaminepentaacetic acid, nitrilotriacetic acid, 1,3-diaminopropanetetraacetic acid or phosphonocarboxylic acid, a persulfate or quinone. In addition to such an oxidizing agent, the bleaching bath may contain a rehalogenation agent such as alkali bromide or ammonium bromide, borate, carbonate and nitrate as appropriate. A fixing bath and a bleach-fix bath generally contain thiosulfate (sodium or ammonium salt), acetate, borate, ammonium or potassium alum, and sulfite.

Although any of known bleaching agents can be used in bleach-fix baths, organic complex salts of Fe(III) (e. g., Fe(III) complex salts of aminopolycarboxylic acids), organic acids such as citric acid, tartaric acid and malic acid, persulfates and hydrogen peroxide are used to advantage.

Of these bleaching agents, organic complex salts of Fe(III) are preferred in particular from the viewpoints of rapid processing and prevention of environmental pollution. Examples of aminopolycarboxylic acids useful for forming organic complex salts of Fe(III) and salts thereof include not only biodegradable aminopolycarboxylic acids, such as ethylenediaminedisuccinic acid (SS body), N-(2-caboxylatoethyl)-L-aspartic acid, β-alaninediacetic acid andmethyliminodiacetic acid, but also ethylenediaminetetraacetic acid, diethylenetriaminepentaacetic acid, 1,3-diaminopropanetetraacetic acid, propylenediaminetetraacetic acid, nitrilotriacetic acid, cyclohexanediaminetetraacetic acid, iminodiacetic acid and glycoletherdiaminetetraacetic acid. The salts formed from these acids may be any of sodium, potassium, lithium and ammonium salts. Of those acids, ethylenediaminedisuccinic acid (SS body), N-(2-carboxylatoethyl) -L-aspartic acid, β-alaninediacetic acid, ethylenediaminetetraacetic acid, 1,3-diaminopropanetetraacetic acid and methyliminodiacetic acid are preferred over the others because their Fe(III) complex salts can ensure good photographic properties. These complex salts of ferric ion may be used in themselves, or they may be formed in solutions by use of ferric salts, such as ferric sulfate, ferric chloride, ferric nitrate, ammonium ferric sulfate and ferric phosphate, and chelating agents such as aminopolycarboxylic acids. Further, the chelating agents may be added in excess of an amount required for forming ferric ion complex salts. Of iron complex salts, aminopolycarboxylic acid-iron complex salts are preferred over the others.

The addition amount of a bleaching agent is determined so that the processing solution prepared has a bleaching agent concentration of 0.01 to 1.0 mole/liter, preferably 0.03 to 0.80 mole/liter, far preferably 0.05 to 0.70 mole/liter, particularly preferably 0.07 to 0.50 mole/liter. The solid bleach-fix composition is designed so that a bleach-fix bath and a replenisher for the bleach-fix bath have their respective bleaching agent concentrations within the foregoing range.

It is preferable that the bleach-fix bath contains a wide variety of known organic acids (e.g., glycolic acid, succinic acid, maleic acid, malonic acid, citric acid, sulfosuccinic acid) , organicbases (e.g., imidazole, dimethylimidazole), the compounds represented by formula (A-a) disclosed in JP-A-9-211819, including 2-picolinic acid, and the compounds represented by formula (B-b) disclosed in the same patent document as cited above, including kojic acid. The suitable addition amount of such a compound is determined so that the compound has its concentration within the range of 0.005 to 3.0 moles, preferably 0.05 to 1.5 moles, per liter of processing solution prepared. Needless to say, the solid bleach-fix composition is designed so that a bleach-fix bath and a replenisher for the bleach-fix bath have concentrations of such compounds within the foregoing range.

The solid bleach-fix composition relating to the invention does not necessarily require thiosulfates as fixing agents. On the contrary, absence of thiosulfates is favorable because it brings about reduction of turbidity or precipitates appearing in the bleach-fix bath.

One or more than one of known fixing chemicals can be used as a fixing agent of the bleach-fix bath. Such fixing chemicals are water-soluble silver halide solvents, such as thiosulfates including sodium thiosulfate and ammonium thiosulfate, thiocyanates including sodium thiocyanate and ammonium thiocyanate, thioether compounds including ethylenebisthioglycolic acid and 3,6-dithia-1,8-octanediol, and thioureas. On the other hand, a special bleach-fix bath containing a combination of the fixing agent as disclosed in JP-A-55-155354 and a large amount of halide, such as potassium iodide, can also be employed. In the invention, the use of thiosulfates, especially ammonium thiosulfate is advantageous. The suitable concentration of fixing chemicals in each of fixing and bleach-fix baths prepared from tabular or granular processing agents is from 0.3 to 3 mol/l, preferably 0.5 to 2.0 mol/l. The solid bleach-fix composition is designed so that a bleach-fix bath prepared or a replenisher prepared for the bleach-fix bath has its fixing chemical concentration in the foregoing range.

The suitable pH range at the time when bleaching and fixing agents are dissolved in a bleach-fix bath relating to the invention is from 3 to 8, preferably from 4 to 8. When the pH is lower than the foregoing range, the desilvering capability is increased, but deterioration of the bath and conversion of cyan dyes into leuco compounds thereof are accelerated. When the pH is higher than the foregoing range, on the other hand, the desilvering is retarded and stains are liable to develop. The pH range of a bleaching bath prepared from the granulated processing chemicals according to the invention is 8 or below, preferably from 2 to 7, particularly preferably from 2 to 6. When the pH is lower than the foregoing lower limit, deterioration of the bath and conversion of cyan dyes into leuco compounds thereof are accelerated. When the pH is higher than foregoing upper limit, on the other hand, desilvering is retarded and stains are liable to develop. For the pH adjustment, the solid-state acids as recited above, the solid-state alkalis as recited above, such as potassium hydroxide, sodium hydroxide, lithium hydroxide, lithium carbonate, sodium carbonate and potassium carbonate, and acidic or alkaline buffers can be added on an as needed basis.

The bleach-fix bath can further contain various other additives including a brightening agent, an antifoaming agent or a surfactant, and polyvinyl pyrrolidone. Additionally, it is also permitted to incorporate the brightening agent in the developing solution prepared into a color developer so as to have a concentration of 0.02 to 1.0 mol/liter. It is appropriate that the bleach-fix bath and the fixing bath contain as preservatives sulfite ion-releasing compounds, such as sulfites (e.g., sodiumsulfite, potassium sulfite, ammonium sulfite), hydrogen sulfites (e.g., ammonium hydrogen sulfite, sodium hydrogen sulfite, potassium hydrogen sulfite) and metabisulfites (e.g., potassium metabisulfite, sodium metabisulfite, ammonium metabisulfite), and arylsulfinic acids, such as p-toluenesulfinic acid and m-carboxybenzenesulfinic acid. The suitable concentration of these compounds is from about 0.02 to about 1.0 mol/l, based on sulfite ions or sulfinate ions.

In addition to the preservatives as recited above, ascorbic acid, carbonyl-hydrogen sulfite adducts or carbonyl compounds may be added as preservatives.

After fixation or bleach-fix (blix) processing, silver halide photographic materials are generally subjected to wash and/or stabilization processing. In the wash processing, there occurs a problem that bacteria propagate themselves to form scum in a wash tank and the scum formed adheres to photosensitive materials processed in the tank. As a solution to the problem, the method of reducing calcium and magnesium ions as disclosed in JP-A-61-131632 can be adopted. In addition, it is possible to use in the wash bath the isothiazolone compounds and thiabendazoles disclosed in JP-A-57-8542, chlorine-containing bactericides, such as sodium salt of chlorinated isocyanuric acid, benzotriazoles, and other bactericides as described in Hiroshi Horiguchi, Bohkin Bohbaizai no Kagaku (which means "Antibacterial and Mold-proof Chemistry"); Biseibutsu no Mekkin Sakkin Bohbai Gijutsu (which means "Arts of Sterilizing and Pasteurizing Microbes, and Proofing Against Molds"), compiled by Eisei Gijutsukai; and Bohkin-Bohbaizai Jiten (which means "Encyclopedia of Anti-bacteria and Anti-molds"), compiled by Nippon Bohkin Bohbai Gakkai.

After the conclusion of bleach-fixation, processing with a stabilizing bath as a wash substitute or a stabilizing bath for image stabilization is performed in many cases. These baths are low in concentration, so the granular processing chemicals do not have much effect. However, granulated processing chemicals can be prepared from such baths, if desired. To the processing chemicals for a stabilizing bath, the method of reducing calcium and magnesium ions as disclosed in JP-A-62-288838 can be applied very effectively. In addition, it is possible to use in the stabilizing bath the isothiazolone compounds and thiabendazoles disclosed in JP-A-57-8542, the chlorine-containing bactericides, such as sodium salt of chlorinated isocyanuric acid disclosed in JP-A-61-120145, the benzotriazoles disclosed in JP-A-61-267761, copper ion, and other bactericides as described in Hiroshi Horiguchi, Bohkin Bohbai no Kagaku (which means "Antibacterial and Mold-proof Chemistry") , Sankyo Shuppan (1986) ; Biseibutsu no Mekkin Sakkin Bohbai Gijutsu (which means "Arts of Sterilizing and Pasteurizing Microbes, and Proofing Against Molds"), compiled by Eisei Gijutsukai, published by Kogyo Gijutsu Kai in 1982; and Bohkin-Bohbaizai Jiten (which means "Encyclopedia of Anti-bacteria and Anti-molds"), compiled by Nippon Bohkin Bohbai Gakkai in 1986.

Furthermore, surfactants as agents for draining water off and chelating agents represented by EDTA as water softening agent can also be used.

<<Sensitive Materials to which the Invention is Applicable>>

Further, sensitive materials usable in the invention are described. Specifically, as described above in relation to the objects and the background of the invention, the sensitive materials usable in the invention include picture-taking color photographic materials, color photographic paper, picture-taking black-and-white photographic materials and black-and-white photographic paper, which prevail in the photo market. These sensitive materials each have at least one light-sensitive layer on a support. A typical example of such materials is a silver halide photographic material having on a support at least one light-sensitive layer made up of a plurality of silver halide emulsion layers differing from one another in sensitivity but having substantially the same color sensitivity.

In picture-taking multilayer silver halide color photographic materials, each of the light-sensitive layers is a unit light-sensitive layer having sensitivity to any of blue light, green light and red light. As to the arranging order of these unit light-sensitive layers from the support side, it is general to provide a red-sensitive layer, a green-sensitive layer and a blue-sensitive layer in the order presented. Depending on the desired purpose, however, the unit light-sensitive layers may be arranged in inverse order, or it is permitted to take an arranging order such that a layer having certain color sensitivity is sandwiched between layers constituting a unit light-sensitive layer having color sensitivity different from that of the layer sandwiched. Further, light-insensitive layers may be provided between the silver halide light-sensitive layers and as the topmost and lowest layers. In these layers, couplers as described below, DIR compounds and color mix inhibitors may be contained. As to at least two silver halide emulsion layers constituting each unit light-sensitive layer, it is appropriate that a high-speed emulsion layer and a low-speed emulsion layer be arranged in decreasing order of sensitivity toward the support as disclosed in DE 1, 121, 470 andGB 923, 045. Alternatively, as disclosed in JP-A-57-112751, JP-A-62-200350, JP-A-62-206541 and JP-A-62-206543, it is allowable to arrange a low-speed emulsion layer on the side distant from the support and a high-speed emulsion layer on the side near the support.

In addition, as disclosed in JP-B-49-15495, it is also allowable to take an arrangement that three layers differing in sensitivity are provided in the decreasing order of sensitivity towards a support. Specifically, the silver halide emulsion layer having the highest sensitivity is arranged as the upper layer, the silver halide emulsion layer having the sensitivity lower than that of the upper layer is arranged as the intermediate layer and the silver halide emulsion layer having the sensitivity lower than that of the intermediate layer is arranged as the lower layer. In the case where three layers arranged are different in sensitivity to light but the same in color sensitivity, as disclosed in JP-A-59-202464, the arrangement in the order of the medium-speed emulsion layer, the high-speed emulsion layer and the low-speed emulsion layer from the side distant from the support may also be adopted.

For improvement of color reproducibility, as disclosed in U.S. Patent Nos. 4,663,271, 4,705,744 and 4,707,436, JP-A-62-160448 and JP-A-63-89850, it is favorable that donor layers (CL) having interlayer effects and differing in spectral sensitivity distribution from main light-sensitive layers, such as BL, GL and RL, are arranged in the positions adjacent to or in vicinity of the main light-sensitive layers.

In photosensitive materials for print use, a reflective support is generally used and, in many cases, a red-sensitive layer, a green-sensitive layer and a blue-sensitive layer are arranged in the decreasing order of a distance from the support. The silver halide emulsions used therein are emulsions containing cubic grains of silver chloride or silver chlorobromide high in chloride content.

Silver halide photographic emulsions usable in the invention can be prepared using the methods as described, e.g., in Research Disclosure (hereinafter abbreviated as "RD"), No. 17643(Dec. 1978), pp. 22-23, entitled "I. Emulsion Preparation and Types"; *ibid*., No. 18716 (Nov. 1979), p. 648; *ibid*., No. 307105 (Nov. 1989), pp. 863-865; P. Glafkides, Chemie et Physique Photographique, Paul Montel (1967); G.F. Duffin, Photographic Emulsion Chemistry, The Focal Press (1966); and V.L. Zelikman, et al., Making and Coating Photographic Emulsion, The Focal Press (1964). The monodisperse emulsions disclosed in U.S. Patent Nos. 3,574,628 and 3, 655, 394, and GB No. 1,413,748 are also used to advantage.

The additives usable in color photographic materials are described in the RDs cited above, and the locations where they are described in each of those references are listed below.

| Kinds of Additives | RD 17643 | RD 18716 | RD 307105 |
|---|---|---|---|
| Chemical sensitizer | p. 23 | p. 648, right column | p. 866 |
| Sensitivity increasing agent | | p. 648, right column | |
| Spectralsensitizer and Supersensitizer | pp. 23-24 | p. 648, right column, to p. 649, right column | pp. 866-868 |
| Brightening agent | p. 24 | p. 647, right column | p. 868 |
| Light absorbent, Filter dye, UV absorbent | pp. 25-26 | p. 649, right column, to p. 650, left column | p. 873 |
| Binder | p. 26 | p. 651, left column | pp. 873-874 |
| Plasticizer, Lubricant | p. 27 | p. 650, right column | p. 876 |
| Coating aid, Surfactant | pp. 26-27 | p. 650, right column | pp. 875-876 |
| Antistatic agent | p. 27 | p. 650, right column | pp.876-877 |
| Matting agent | | | pp. 878-879 |

As printers for making prints by the photographic processing using the solidified processing chemicals according to the invention, general-purpose printers can be used. In addition, the present processing system is not only applicable in print systems using general negative printers, but also suitable for the scanning exposure systems using cathode-ray tubes (CRTs). CRT exposure devices are simple, compact and inexpensive, compared with laser-utilized devices. Further, it is easy for them to adjust their optical axes and colors. In cathode-ray tubes for imagewise exposure, various kinds of luminophors enabling light emission in spectral regions as required are used. More specifically, any one of red, green and blue luminophors, or a mixture of two or more of those luminophors can be used therein. The spectral regions are not limited to the red, green and blue ones, but phosphors emitting yellow light, orange light, violet light or light in the infrared region may also be used. In many cases, cathode-ray tubes enabling emission of white light by using those luminophors in mixed states are employed.

In the case of using a photosensitive material having two or more light-sensitive layers differing in spectral sensitivity distribution and a cathode-ray tube having phosphors capable of emitting light in two or more different spectral regions, simultaneous exposure to two or more different colors, namely light emission from the tube surface by inputting image signals of two or more different colors into the cathode-ray tube, may be performed. Alternatively, the method of inputting image signals of different colors sequentially into a cathode-ray tube to cause the tube to emit light of each color in succession and performing exposure to the thus emitted light through a film capable of cutting off colors other than the color of emitted light (sequential mask exposure) maybe adopted. Ingeneral, the sequentialmask exposure is favorable for enhancement of image quality, because it permits the use of a high-resolution cathode-ray tube.

The photosensitive materials to which the present processing system is applicable are suitable for use in a digital scanning exposure system utilizing monochromatic high-intensity light from gas laser, light-emitting diode, semiconductor laser or a second harmonic generation source (SHG) in which semiconductor laser or solid laser using semiconductor laser as an optically pumping source is combined with a nonlinear optical crystal. From the standpoint of rendering the exposure system compact and inexpensive, it is advantageous to use semiconductor laser, or a second harmonic generation source (SHG) in which semiconductor laser or solid laser using semiconductor laser as an optically pumping source is combined with a nonlinear optical crystal. In order to design a compact, low-priced, long-life, highly stable device, the use of semiconductor laser is preferred in particular, and it is advisable to use semiconductor laser as at least one of exposure light sources.

When such scanning exposure light sources are used, the maximum spectral sensitization wavelengths of photosensitive materials to which the present processing system is to be applied can be chosen depending on what wavelengths the scanning exposure light sources have. In the case of an SHG light source obtained by combining solid laser using semiconductor laser as optically pumping source or semiconductor laser with a nonlinear optical crystal, the lasing wavelength can be reduced to half, so that blue light and green light can be obtained. Therefore, it is possible to let the photosensitive materials have the spectral sensitivity maxima in the general three wavelength regions, namely blue, green and red regions. Defining the exposure time in such scanning exposure as the time required for exposing the area of one pixel size in the case of a pixel density of 400 dpi, the suitable scanning exposure time is $10^{-4}$ second or below, preferably $10^{-6}$ second or below. In addition, for the purpose of preventing unauthorized copies of photosensitivematerialshavingundergonetheprocessing relating to the invention, latent images with microdot patterns can be imparted to the photosensitive materials. The method for imparting such latent images to photosensitive materials can be found in JP-A-9-226227.

The scanning exposure systems suitable for use in the invention are disclosed in detail in the publications cited in the above table. For the processing of photosensitive materials to which the present processing system is applicable, the processing materials and processing methods disclosed in JP-A-2-207250, page 26, lower right column, line 1, to page 34, upper right column, line 9, and JP-A-4-97355, page 5, upper left column, line 17, to page 18, lower right column, line 20, can be used to advantage.

[Examples]

Now, the invention is illustrated in detail by reference to the following examples, but these examples should not be construed as limiting the scope of the invention in any way.

Example 1-1 (Using Thin Film Evaporating Concentrator of the First Embodiment)

1. Preparation of Color Paper Sample

A silver halide color photographic material (Sample No. 101) was prepared by subjecting a paper support coated with polyethylene resin on both sides to corona discharge treatment, then providing on the support surface a gelatin undercoat layer containing sodium dodecylbenzenesulfonate, and further coating the undercoat layer sequentially with first to seventh photographic constituent layers. Coating compositions for these photographic constituent layers were prepared in the same manners as those of Sample (118) in Example 2 of JP-A-2003-195437.

2. Exposure and Processing Conditions for Color Paper Sample

Photographs of persons standing in the middle-distant sunshiny outdoors were shot on a commercially available color negative film, Fuji Color Venus 800 (trade name, a product of Fuji Photo Film Co., Ltd.), and processed with an automatic developing machine, FP-363SC (trade name, made by Fuji Photo Film Co., Ltd.), using the color negative film processing formula CN-16S and its processing chemicals (trade name, products of Fuji Photo Film Co., Ltd.).

The image information of the processed color negative film was read with a mini-lab printer processor, Frontier 340E (trade name, made by Fuji Photo Film Co., Ltd.), and the Sample No. 101 was exposed by means of a laser exposure unit bearing the thus read image information and then subjected to continuous processing performed using the following processing solutions in accordance with the following processing steps until the development-conditions were in running equilibrium (the cumulative volume of the replenisher supplied to the developer became 3 times the developing tank volume).

Making supplemental remarks about Frontier 340E, modifications were made to the tanks and the racks so that the photographic processing was accomplished in the following processing steps, and besides, rotary feeder-system replenishing apparatus was installed additionally for adding a granular replenishing agent directly to a processing tank and replenishing apparatus for addition of water to a processing tank was also installed additionally.

Incidentally, the replenishing agent used in the color development was the 4:1 by weight mixture of granulated matter 7 and granulated matter 15 disclosed in Example 1 of JP-A-2002-196456, and the replenishing agent used in bleach-fix processing was comparable to the granulated matter 7 disclosed in Example 2 of JP-A-2002-196456 and prepared according to the method described hereinafter (See "3. Preparation Method of Replenishing Agent for Bleach-Fix Bath")

| replenished* Processing Step | Temperature | Time | Amount (granular agent) | water |
|---|---|---|---|---|
| Color development | 45°C | 15 sec | 4.0 g | 40 mL |
| Bleach-fix | 40°C | 150 sec | 7.0 g | 28 mL |
| Rinse 1** | 40°C | 5 sec | - | |
| Rinse 2** | 40°C | 5 sec | - | |
| Rinse 3** | 40°C | 5 sec | - | |
| Rinse 4** | 40°C | 8 sec | - | 150 mL |
| Drying | 80°C | 10 sec | | |

\* Amount replenished was per m$^2$ of photosensitive material.

\*\* In washing process, 4-stage countercurrent method from rinse 4 to rinse 1 was adopted.

\*\*\* Overflows from individual steps were gathered together and stored in one tank as the waste solution.

Additionally, the rinse system adopted herein was a rinse cleaning system RC50 (trade name, made by Fuji Photo Film Co., Ltd.), wherein the rinse solution was taken out of Rinse 3 and sent to a reverse osmosis module (RC50D) by means of a pump, the permeated water obtained in this module was fed into Rinse 4, and the concentrated water was sent back to Rinse 3. The pump pressure was adjusted so as to keep the amount of water permeating through the reverse osmosis film within the range of 200 to 300 mL/min, and the water was circulated for 10 hours a day while regulating the temperature.

The composition of each processing solution is described below.

<Color developer>

| Cation exchange water | 800 mL |
|---|---|
| Surfactant of dimethylpolysiloxane type (Silicone KF351A, trade name, produced by Shin-Etsu Chemical Co., Ltd.) | 0.1 g |
| Ethylenediaminetetraacetate | 4.0 g |
| Potassium chloride | 9.0 g |
| Potassium bromide | 0.03 g |
| Sodium sulfite | 0.1 g |
| Brightening agent Hakkol FWA-SF (trade name, produced by Showa Chemicals) | 4.0 g |
| Sodium p-toluenesulfonate | 20.0 g |
| Potassium carbonate | 27.0 g |
| Disodium N,N-bis(sulfonatoethyl)hydroxylamine | 10.0 g |
| N-Ethyl-N-(β-methanesulfonamidoethyl)-3-methyl-4-aminoaniline 3/2 sulfate monohydrate | 10.0 g |
| Water to make | 1,000 mL |
| pH (adjusted with potassium hydroxide and sulfuric acid at 25°C) | 10.30 |

<Bleach-Fix Bath>

| Water | 600 mL |
|---|---|
| Ammonium thiosulfate (750 g/liter) | 110 mL |
| Ammonium sulfite | 40.0 g |
| Ammonium ethylenediaminetetraacetato- | 50.0 g |

(continued)

| | |
|---|---|
| ferrate (III) | |
| Ethylenediaminetetraacetic acid | 5.0g |
| Succinic acid | 20.0g |
| Water to make | 1,0.00 mL |
| pH (adjusted with nitric acid and aqueous ammonia at 25°C) | 5.5 |
| [Rinsing Bath] | |
| Sodium chloroisocyanurate | 0.02 g |
| Deionized water (conductivity: 5μS/cm or below) | 1,000 mL |
| pH | 6.0 |

3. Preparation Method of Replenishing Agent for Bleach-fix Bath

At the time when a waste solution mixture was accumulated to 1.0L (which corresponded to the processing quantity of a 5.6 m$^2$ of photosensitive material), the waste solution mixture was concentrated and solidified with the thin film (flash) evaporator as shown in Fig. 1. The concentrating and solidifying operations were performed under conditions that the number of revolutions was set at 1,250 rpm, the waste solution mixture was fed at a rate of 0.4 L/h, the heating temperature was kept at 120°C, the clearance between the inner wall and the rotor blade was adjusted to 0.4 mm and the degree of vacuum was kept at 30 Torr. As the inner wall as the heating surface of the evaporator, SUS316 coated with a lining material as set forth in Table 1-1 was used. The solidified matter taken out was mixed with the granulated matter 6 as prepared in Example 2 of JP-A-2001-183780 in proportions of 4: 1 (by weight). While using the thus obtained mixture as a replenishing agent, a running test was performed.

4. Method of Evaluating Noises Produced during Solidification of Waste Solution

In each of the continuous operations under the conditions described in Table 1-1, noises produced at the time when the waste solution was solidified with the thin film (flash) evaporator were measured with an ordinary noise meter, Sound Level Meter NL-21 (made by RION CO., LTD.). The average value of noises produced during the solidification of the waste solution by use of the evaporator was set forth in Table 1-1. Incidentally, the noise level of the room used for noise measurement was maintained in the range of 40 to 60 dB and the average noise level before the evaporator was set in motion was 51.3 dB.

5. Method of Evaluating Stain

Sample No.101 in an unexposed state was subjected to the photographic processing after the conclusion of the continuous processing performed under each of the running test conditions set forth in Table 1-1. After the photographic processing, the sample was washed with 35°C running water for 1 minute. Density measurements of the sample were made before and after the washing, and minimum densities (Dmin) measured with blue light (filtered light corresponding to Status A) were read on the characteristic curves. And the stain was calculated according to the following formula. The case where the calculation value is zero is most favorable, and a smaller value means less stain.

Stain= (Dmin after continuous processing and additional washing) - (Dmin after continuous processing)

Results obtained are shown in Table 1-1.

6. Method of Evaluating Contamination of Sensitive Material

After the conclusion of the processing for each running test, Sample No. 101 cut into L-size (89mm×127mm) and 2L-size (127mm×178mm) sheets was subjected to processing without undergoing any exposure. In the processing, 100 L-size sheets were processed, and immediately thereafter 50 2L-size sheets were processed. Each of the 50 2L-size sheets were visually examined on its white areas and evaluated by the following criteria:

A ⋯ All the sheets suffered no contamination.

B ⋯ Among the 50 sheets, 1 to 5 contamination spots were observed.
C ⋯ Among the 50 sheets, 6 to 20 contamination spots were observed.
D ⋯ Among the 50 sheets, 21 or more contamination spots were observed.

Results obtained are in Table 1-1.

Table 1-1

| No. | Material of inner wall surface | Water contact angle (degrees) | Noise (dB) | Stain | Contamination of sensitive material | Note |
|---|---|---|---|---|---|---|
| 1 | SUS316 | 80.0 | 85.2 | 0.15 | D | Comparison |
| 2 | High-density polyethylene | 74.2 | 83.3 | 0.17 | D | Comparison |
| 3 | PTFE* | 94.9 | 71.6 | 0.01 | A | Invention |
| 4 | PFA* | 92.6 | 72.5 | 0.01 | A | Invention |
| 5 | Hydrotect* | 33.8 | 74.3 | 0.03 | B | Invention |

* The test was carried out under the condition that the SUS surface was coated with PTFE (Polytetrafluoroethylene resin) or PFA (Tetrafluoroethylene-perfluoroalkylvinyl ether copolymer resin), or lined with Hydrotect (film produced by TOTO).

Table 1-1 shows that the experiment Nos. 3 and 4 according to the invention, wherein the water contact angle of the heating surface formed with water was greater than 90 degrees, and the experiment No. 5 according to the invention, wherein the water contact angle was smaller than 40 degrees, caused lower noises than the experiment Nos. 1 and 2 for comparison, wherein the water contact angle was in the range of 40 to 90 degrees, inclusive of 40 degrees but exclusive of 90 degrees, and besides, the experiment Nos. 3 to 5 according to the invention suffered no or almost no thermal decomposition in spite of the aforementioned high reuse rate as seen from greatly reduced stain and far less contamination of the sensitive material.

Example 1-2 (Using Thin Film Evaporating Concentrator of the First Embodiment)

The same experiment as the present experiment No.3 of Example 1-1 was carried out, except that the water evaporated during the solidification of the waste solution mixture was recovered and reused for replenishing the bleach-fix bath and the rinsing bath. Therein, the same processing performances as in the present experiment No.3 of Example 1-1 were achieved. This result indicates that the replenishment rate can be further reduced.

Example 2-1 (Using Thin Film Evaporating Concentrator of the Second Embodiment)

1. Preparation of Color Paper Sample

A silver halide color photographic material (Sample No. 101) was prepared by subjecting a paper support coated with polyethylene resin on both sides to corona discharge treatment, then providing on the support surface a gelatin undercoat layer containing sodium dodecylbenzenesulfonate, and further coating the undercoat layer sequentially with first to seventh photographic constituent layers. Coating compositions for these photographic constituent layers were prepared in the same manners as those of Sample (G-28) in Example 2 of JP-A-2003-98616.

2. Exposure and Processing Conditions for Color Paper Sample

Photographs of persons standing in the middle-distant sunshiny outdoors were shot on a commercially available color negative film, Fuji Color Venus 800 (trade name, a product of Fuji Photo Film Co. , Ltd. ) , and processed with an automatic developing machine, FP-363SC (trade name, made by Fuji Photo Film Co., Ltd.), using the color negative film processing formula CN-16S and its processing chemicals (trade name, products of Fuji Photo Film Co., Ltd.).

The image information of the processed color negative film was read with a mini-lab printer processor, Frontier 340E (trade name, made by Fuji Photo Film Co., Ltd.), and the Sample No. 101 was exposed by means of a laser exposure unit bearing the thus read image information and then subjected to continuous processing performed using the following processing solutions in accordance with the following processing steps until the development-conditions were in running equilibrium (the cumulative volume of the replenisher supplied to the developer became 3 times the developing tank volume).

Making supplemental remarks about Frontier 340E, modifications were made to the tanks and the racks so that the processing was accomplished in the following processing steps, and besides, rotary feeder-system replenishing apparatus was installed additionally for adding a granular replenishing agent directly to a processing tank and replenishing apparatus for addition of water to a processing tank was also installed additionally.

Incidentally, the replenishing agent used in the color development was the 4:1 by weight mixture of granulated matter 7 and granulated matter 15 disclosed in Example 1 of JP-A-2002-196456, and the replenishing agent used in bleach-fix processing was comparable to the granulated matter 7 disclosed in Example 2 of JP-A-2002-196456 and prepared according to the method described hereinafter (See "3. Preparation Method of Replenishing Agent for Bleach-Fix Bath")

| replenished*<br>Processing Step | Temperature | Time | Amount<br>(granular agent) | water |
|---|---|---|---|---|
| Color development | 45°C | 20 sec | 4.5 g | 40 mL |
| Bleach-fix | 40°C | 20 sec | 8 g | 28 mL |
| Rinse 1** | 40°C | 5 sec | - | |
| Rinse 2** | 40°C | 5 sec | - | |
| Rinse 3** | 40°C | 5 sec | - | |
| Rinse 4** | 40°C | 8 sec | - | 150 mL |
| Drying | 80°C | 10 sec | | |

* Amount replenished was per m$^2$ of photosensitivematerial.

** In washing process, 4-stage countercurrent methodfrom rinse 4 to rinse 1 was adopted.

*** Overflows from individual steps were gathered together and stored in one tank as the waste solution.

Incidentally, the rinse system adopted herein was a rinse cleaning system RC50 (trade name, made by Fuji Photo Film Co., Ltd.), wherein the rinse solution was taken out of Rinse 3 and sent to a reverse osmosis module (RC50D) by means of a pump, the permeated water obtained in this module was fed into Rinse 4, and the concentrated water was sent back to Rinse 3. The pump pressure was adjusted so as to keep the amount of water permeating through the reverse osmosis film within the range of 200 to 300 mL/min, and the water was circulated for 10 hours a day while regulating the temperature.

The composition of each processing solution is described below.

<Color developer>

| | |
|---|---|
| Cation exchange water | 800 mL |
| Surfactant of dimethylpolysiloxane type<br>(Silicone KF351A, trade name, produced by<br>Shin-Etsu Chemical Co., Ltd.) | 0.1 g |
| Ethylenediaminetetraacetate | 4.0 g |
| Potassium chloride | 9.0 g |
| Potassium bromide | 0.03 g |
| Sodium sulfite | 0.1 g |
| Brightening agent Hakkol FWA-SF (trade<br>name, produced by Showa Chemicals) | 4.0 g |
| Sodium p-toluenesulfonate | 20.0 g |
| Potassium carbonate | 27.0 g |
| Disodium N,N-bis(sulfonatoethyl)hydroxylamine | 10.0 g |
| N-Ethyl-N-(β-methanesulfonamidoethyl)-3-methyl<br>-4-aminoaniline 3/2 sulfate monohydrate | 10.0 g |
| Water to make | 1,000 mL |
| pH (adjusted with potassium hydroxide | 10.30 |

(continued)

| and sulfuric acid at 25°C) | |
|---|---|

<Bleach-Fix Bath>

| Water | 600 mL |
|---|---|
| Ammonium thiosulfate (750 g/l) | 110 mL |
| Ammonium sulfite | 40.0 g |
| Ammonium ethylenediaminetetraacetato-ferrate(III) | 50.0 g |
| Ethylenediaminetetraacetic acid | 5.0g |
| Succinic acid | 20.0g |
| Water to make | 1,000 mL |
| pH (adjusted with nitric acid and aqueous ammonia at 25°C) | 6.0 |

<Rinsing Bath>

| Sodium chloroisocyanurate | 0.02 g |
|---|---|
| Deionized water (conductivity: 5μS/cm or below) | 1,000 mL |
| pH | 6.0 |

3. Preparation Method of Replenishing Agent for Bleach-fix Bath

At the time when a waste solution mixture was accumulated to 230 mL (which corresponded to the processing quantity of a 1 m$^2$ of photosensitive material), the waste solution mixture was solidified with the thin film (flash) evaporator as shown in Fig. 1, wherein the number of revolutions was set at 1,500 rpm, the waste solution mixture was fed at a rate of 0.4 L/h and the other conditions adopted were those specified in Table 2-1. An about 10 g portion of the thus solidified matter was taken out, and mixed with the granulated matter 7 as prepared in Example 2 of JP-A-2002-196456 in proportions of 4:1 (by weight). A running test was performed using the mixture thus obtained as a replenishing agent added to the bleach-fix bath for every processing of 1 m$^2$ photosensitive material.

4. Method of Evaluating Filter Clogging

The amount of circulation through Rinse 3 was measured in each of the running tests using the replenishing agents obtained under the conditions specified in Table 2-1. The amount of circulation through Rinse 3 before the processing for each running test was 5 L/min. A cause of a drop in flow rate after the processing for each running test was filter clogging, and the amount of circulation was restored to 5 L/min at every condition level by replacing the filter with a new one.
Results obtained are shown in Table 2-1.

5. Method of Evaluating Stain

Specimens of Sample No.101 in an unexposed state were subjected to photographic processing before the commencement and after the conclusion of the processing for each running test, respectively. The minimum density (Dmin) of each of the specimens was read with blue light (filtered light corresponding to Status A) and the stain was calculated according to the following formula. The case where the calculation value is zero is most favorable, which means no deterioration in white area quality.

Stain= (Dmin after running test) - (Dmax before running

test)

Results obtained are shown in Table 2-1.

6. Method of Evaluating Contamination of Sensitive Material

After the conclusion of the processing for each running test, Sample No. 101 cut into L-size (89mm×127mm) and quarto-size (203mm×254mm) sheets was subjected to processing without undergoing any exposure. In the processing, L-size 200 sheets were processed, and immediately thereafter quarto-size 10 sheets were processed. The white areas of the quarto-size 10 sheets were checked visually and evaluated by the following criteria:

A ··· All of the 10 sheets suffered no contamination.
B ··· Among the 10 sheets, 1 to 5 contamination spots were observed.
C ··· Among the 10 sheets, 6 to 10 contamination spots were observed.
D ··· Among the 10 sheets, 11 or more contamination spots were observed.

Results obtained are in Table 2-1.

Table 2-1

| No. | Clearance | Degree of vacuum | Heating Temperature | Rate of flow through Rinse 3 | Stain | Contamination of sensitive material | note |
|---|---|---|---|---|---|---|---|
| 1 | 0.05 mm | 90 Torr | 100°C | 2.2 L/min | 0.12 | D | Comparison |
| 2 | 0.05 mm | 30 Torr | 100°C | 2.4 L/min | 0.11 | D | Comparison |
| 3 | 0.4mm | 30 Torr | 100°C | 4.8 L/min | 0.01 | A | Invention |
| 4* | 0.4 mm | 30 Torr | 100°C | 4.4 L/min | 0.03 | B | Invention |
| 5 | 0.4 mm | 90 Torr | 100°C | 4.6 L/min | 0.03 | B | Invention |
| 6 | 0.4 mm | 30 Torr | 160°C | 4.5 L/min | 0.02 | B | Invention |
| 7 | 1.2 mm | 30 Torr | 100°C | 1.8 L/min | 0.15 | D | Comparison |

* The conditions in No.4 were the same as in No. 3, except that the blade member was flat in shape and its center of gravity is situated in the midpoint between the rotating axis and the cylinder.

Example 2-2 (Using Thin Film Evaporating Concentrator of the Second Embodiment)

The same experiment as the present experiment No.3 of Example 2-1 was carried out, except that the water evaporated during the solidification of the waste solution mixture was recovered and reused for replenishing the bleach-fix bath and the rinsing bath. Therein, the same processing performances as in the present experiment No.3 of Example 2-1 were achieved. This result indicates that the replenishment rate can be further reduced.

The thin film evaporating concentrator of the first embodiment, which has at least one rotor blade rotating in a cylinder and a heating surface as its members and is characterized by a specified water contact angle which water forms with the surface of each member, can solidify a photographic waste solution without not only causing deterioration from overheating but also making noises.

Besides, by having a clearance of 0.1 to 1.0 mm, preferably 0.2 to 0.9 mm, between a heating surface and the rotor blade in its cylinder and being configured so as to rotate the rotor blade in a condition that their center of gravity is in a position shifted to the heating surface side, preferably while swinging them in the direction opposite to a rotating direction thereof, the thin film evaporating concentrator of the second embodiment enables solidification of a photographic waste solution without quality deterioration from overheating.

Further, when a photographic waste solution is formed into solidmatter byusing the thin film evaporating concentrator of the first or second embodiment under specific temperature and degree of vacuum, a photographic processing chemical can be recomposed by using this solid matter to result in reuse of the photographic waste solution and reduction in an environmental load of the photographic waste solution.

The entire disclosure of each and every foreign patent application from which the benefit of foreign priority has been claimed in the present application is incorporated herein by reference, as if fully set forth.

**Claims**

1. A thin film evaporating concentrator comprising:

   a cylinder having an inner wall surface as a heating surface; and
   at least one rotor blade rotating about a central axis of the cylinder,

   wherein rotating of said at least one rotor blade provides a photographic processing waste solution with a centrifugal movement, so as to evaporate the photographic processing waste solution on the inner wall surface to be formed into a thin film, and
   wherein at least one of (i) the inner wall surface of the cylinder and (ii) a surface of each of said at least one rotor blade defines a water contact angle of one of 90 degrees or more and smaller than 40 degrees.

2. The thin film evaporating concentrator of claim 1,
   wherein a motor rotating said at least one rotor blade has a rated rotating torque of 1.4 N·m or below.

3. A method of evaporating and solidifying a photographic processing waste solution, the method comprising
   evaporating the photographic processing waste solution at 10 to 80 Torr (1.33 to 10.64 kPa) of vacuum by using a thin film evaporating concentrator of claim 1.

4. A method of evaporating and solidifying a photographic processing waste solution, the method comprising
   evaporating the photographic processing waste solution by using a thin film evaporating concentrator of claim 1,
   wherein a temperature of the heating surface is from 60 to 150°C.

5. A reuse method of a photographic processing waste solution, the method comprising:

   evaporating and solidifying the photographic processing waste solution by using a thin film evaporating concentrator of claim 1, so as to form the photographic processing waste solution into a solid matter; and
   preparing a solid photographic processing composition that includes the solid matter in amount of from 50 to 90% by weight.

6. The reuse method of a photographic processing waste solution of claim 5,
   wherein the evaporating and solidifying is performed without a silver recovering treatment for the photographic processing waste solution.

7. A thin film evaporating concentrator of a photographic processing waste solution, comprising:

   a cylinder having an inner wall surface as a heating surface; and
   at least one rotor blade, each of which being configured so as to rotate, in the cylinder, about a central axis of the cylinder serving as a rotating axis,

   wherein a clearance between the heating surface and each of said at least one rotor blade is from 0.1 to 1.0mm.

8. The thin film evaporating concentrator of claim 7,
   wherein each of said at least one rotor blade is provided to be capable of swinging freely in a rotating direction of said at least one rotor blade and a opposite direction to the rotating direction, and
   wherein each of said at least one rotor blade has a center of gravity in a position shifted to the heating surface from a midpoint between the rotating axis and the heating surface.

9. A method of evaporating and solidifying a photographic processing waste solution, the method comprising
   evaporating the photographic processing waste solution at 20 to 80 Torr (2.66 to 10.64 kPa) of vacuum by using a thin film evaporating concentrator of claim 7.

**10.** A method of evaporating and solidifying a photographic processing waste solution, the method comprising
evaporating the photographic processing waste solution by using a thin film evaporating concentrator of claim 7,
wherein a temperature of the heating surface is from 60 to 150°C.

**11.** A reuse method of a photographic processing waste solution, the method comprising:

evaporating and solidifying the photographic processing waste solution by using a thin film evaporating concentrator of claim 7, so as to form the photographic processing waste solution into a solid matter; and
preparing a solid photographic processing composition that includes the solid matter in amount of from 50 to 90% by weight.

**12.** The reuse method of a photographic processing waste solution of claim 11,
wherein the evaporating and solidifying is performed without a silver recovering treatment for the photographic processing waste solution.

FIG. 1

FIG. 2

FIG.3

32

FIG. 4

PI GRANULAR
REPLENISHING
AGENT

REPLENISHING
WATER TANK

REPLENISHING
WATER

P2 GRANULAR
REPLENISHING
AGENT

補充水
タンク

補充水
タンク

補充水

P1顆粒
補充剤

P2顆粒
補充剤

PI PROCESSING
TANK

P1処理槽

P2処理槽

PS処理槽

FRSS処理

FRSS PROCESSING

P2 PROCESSING
TANK

廃液回収（約1L/B）

PS PROCESSING
TANK

RECOVERY OF
WASTE SOLUTIONS
(ABOUT 1 L/B)

乾燥・固化

回収水（約900mL/日）

DRYING・
SOLIDIFICATION

固形分（約100g/日）

RECOVERED WATER
(ABOUT 900 mL/DAY)

SOLIDIFIED MATTER
(ABOUT 100g/DAY)

P2用造粒処理

GRANULATION TREATMENT
FOR P2

P2顆粒製造

FORMATION OF P2 GRANULES